# EUROPÄISCHE PATENTANMELDUNG

(11) **EP 2 369 542 A2**
(43) Veröffentlichungstag der Anmeldung: **28.09.2011**
(21) Anmeldenummer: 11159753.0
(22) Anmeldetag: 07.10.2005
(51) Int. Cl.: G06Q 10/00

(54) **Warenauslieferungssystem, Verfahren zur Auslieferung von Waren, Versandkomponente und Ausgabestelle für Waren**

(62) Teilanmeldung aus: 05021967.4
(71) Anmelder: Deutsche Post AG, 53113 Bonn (DE)
(72) Erfinder: Ulrich, Keith, 53227, Bonn-Oberkassel (DE)
(74) Vertreter: Jostarndt, Hans-Dieter

(57) **Zusammenfassung**

Die Erfindung betrifft ein Warenauslieferungssystem mit ein oder mehreren Ausgabestellen zur Auslieferung von Waren an einen vorgesehenen Empfänger, wobei ein Informationsträger (71), der eine Warenaushändigung veranlasst, zur Versendung an eine postalische Adresse des vorgesehenen Empfängers der Ware vorgesehen ist und die Ware an einer von der postalischen Adresse des Empfängers verschiedenen Ausgabestelle zur Abholung bereitgestellt wird, wobei der Informationsträger (71) in eine Postsendung (40) integriert oder mit der Postsendung (40) verbindbar ist und Informationen zu der zu liefernden Ware in maschinenlesbarer Form umfasst, wobei die Ausgabestellen so ausgestaltet sind, dass sie jeweils wenigstens einen Signalgeber (160) enthalten, der mit einer Leseeinheit zum Lesen der Information in dem Informationsträger (71) verbunden ist und an den die ausgelesenen Informationen übermittelt werden, wobei das Warenauslieferungssystem eine Abrechnungskomponente umfasst, die zur Abrechnungen von erbrachten Leistungen umfassend das Beschreiben des Informationsträgers (71), den Transport des Informationsträgers (71) zum Empfänger, die Übermittlung der Ware an die Ausgabestellen und die Auslieferung der Waren an den Ausgabestellen nach Aushändigung der Ware an den Empfänger dient, wobei die Abrechnungskomponente zur Verarbeitung von geldwerter Information geeignet ist, und wobei der Informationsträger (71) einen Teil der geldwerten Information zur Bezahlung dieser Leistungen umfasst, wodurch sichergestellt wird, dass eine Abrechnung erst dann erfolgt, wenn der Empfänger die Ware an der Ausgabestelle erhält. Die Erfindung betrifft ferner ein Verfahren zur Auslieferung von Waren.

## Beschreibung

Die Erfindung betrifft ein Warenauslieferungssystem und ein Verfahren zum Ausliefern von Waren.

Ein bekanntes Problem bei Verfahren zum Ausliefern von Waren ist, den vorgesehenen Empfänger zu erreichen.

Zur Lösung des Problems, Warensendungen an sonst nicht unter ihrer Postadresse erreichbare Personen zu übermitteln, sind elektronische Paketfachanlagen bekannt. Derartige elektronische Paketfachanlagen sind in folgenden europäischen Patentschriften der Deutschen Post AG dargestellt: EP 1 408 801 B1; EP 1 408 802 B1; EP 1 409 160 B1 und EP 1 421 537 B1.

Ferner sind Systeme und Verfahren zum Bestellen über elektronische Nachrichtennetzwerke bekannt. Eine Würdigung der bekannten Bestellsysteme und -verfahren sowie ein besonders bevorzugtes Ausführungsbeispiel hiervon sind der Europäischen Patentschrift EP 927 945 B1 entnehmbar.

Aus der deutschen Patentschrift DE 103 24 538 der Deutschen Post AG ist ein gattungsfremdes Verfahren zur automatischen Beauftragung und Durchführung von Druckdienstleistungen und postalischen Leistungen innerhalb eines Versanddienst-Systems bekannt.

Ein weiteres gattungsfremdes Verfahren ist aus der europäischen Patentschrift EP 1 279 132 B1 der Deutschen Post AG bekannt. Bei diesen bekannten Verfahren wird eine geldwerte Information auf einer Ladestelle abgerufen, wobei in der Ladestelle eine Zufallszahl und eine Zahlungsidentifikationsnummer gebildet werden, wobei ein Verkäufer die Zeichenkette als geldwerten Betrag für eine Zahlung erhält und wobei der Verkäufer ferner die Zeichenkette zur Überprüfung ihrer Gültigkeit und zur Veranlassung einer Zahlung an ein eCommerce-Center einreicht. Ferner ist ein Einsatz von Transpondern in vielfältigen Technologiebereichen bekannt. Transponder sind Empfangsgeräte, die nach Empfang ein eigenes Signal abgeben.

Der englische Begriff "Transponder" ist eine Abkürzung aus Transmitter (Sender) und responder [(Signal)-beantworter].

Ferner ist es bekannt, die visuell erfassbare Kennzeichnung von Gegenständen in Transport- oder Logistiksystemen durch RFID-Technologien mit elektronisch mehrfach beschreibbaren und auslesbaren Transpondern zu ersetzen oder zu ergänzen. Derartige Systeme haben den Vorteil, dass in einem Transponder eine Vielzahl von Informationen elektronisch ein- und ausgelesen werden kann, wodurch automatische Transport-, Sortier-, Nachverfolgungs- oder Verteilvorgänge gesteuert werden können, ohne dass die visuelle Anzeige von Informationen erforderlich ist.

Ein Beispiel für die Verwendung von RFID-Transpondern im postalischen Bereich ist in der internationalen Patentanmeldung WO 03/098533 A1 offenbart. Die RFID-Transponder werden an Postsendungen angebracht und diese anhand der ein- und auslesbaren Informationen sortiert und zu einem Zustellort transportiert.

Eine weitere Verwendung von RFID-Labeln ist in der deutschen Gebrauchsmusterschrift DE 202 07 972 U1 offenbart, welche Lastträger wie Paletten mit Transpondern beschreibt. Dabei sind in dem Transponder Informationen wie der Eigentümer, der Inhalt oder die Lastträgeridentifikationsnummer eines gekennzeichneten Lastträgers gespeichert.

Ein Transponder mit Identifikationsangaben (RFID-Transponder) wird üblicherweise als ein RFID-Tag ausgeführt. Ein RFID-Tag besteht aus einem Mikrochip und einer Antenne. Auf dem Chip ist ein Code gespeichert, der verarbeitungsrelevante Informationen enthält. Insbesondere handelt es sich bei den Informationen über IdentifikationsID-Angaben.

Transponder sind so ausgestattet, dass sie auf ein auslösendes (Radio) Signal eines Lesegerätes selbst Signale senden und/oder empfangen. Aktive Transponder enthalten eine Energieversorgung für ihren Betrieb. Passive Transponder erhalten hingegen Energie durch die von dem Lesegerät ausgesendeten Signale.

Der Erfindung liegt die Aufgabe zugrunde, ein Warenauslieferungssystem zu schaffen, das eine hohe Flexibilität der Auslieferung der Waren und eine schnelle und zuverlässige Abrechnung der erbrachten Leistungen ermöglicht.

Erfindungsgemäß wird diese Aufgabe durch ein Warenauslieferungssystem nach Patentanspruch 1 gelöst.

Erfindungsgemäß wird die Aufgabe ferner durch ein Verfahren nach Anspruch 12.

Vorteilhafte Weiterbildungen der Erfindung sind Gegenstand der Ansprüche 2 bis 11 und 13 bis 15.

Die Erfindung beinhaltet ein neuartiges Logistiksystem, das eine Aushändigung von Waren an vorgesehene Empfänger automatisiert und erheblich vereinfacht.

Der Begriff "Logistiksystem" betrifft hierbei jedes System, das dazu geeignet ist, Empfängern vorgesehene Waren auszuhändigen.

Das erfindungsgemäße Warenauslieferungssystem ist ein Logistiksystem, bei dem Informationen zu der auszuliefernden Ware mit einem Informationsträger verschickt werden, wobei der Informationsträger vorzugsweise an eine andere (postalische) Adresse gesandt wird als die durch das Warenauslieferungssystem auszuliefernden Waren.

Zur Erhöhung der Verfügbarkeit der Waren sind zweckmäßigerweise mehrere Ausgabestellen vorgesehen, an denen sich die auszuliefernde Ware befindet.

Die technische Realisierung der Erfindung beinhaltet vorzugsweise eine Datenbank, in der Informationen zu der auszuliefernden Ware und über wenigstens eine für eine Warenauslieferung vorgesehene Ausgabestelle enthalten sind.

Es ist besonders vorteilhaft, dass in der Datenbank Informationen über mehrere für die Warenauslieferung vorgesehene Ausgabestellen enthalten sind.

Eine bevorzugte Ausführungsform der Erfindung sieht vor, dass der Versand des die Warenaushändigung veranlassenden Informationsträgers an eine postalische Adresse eines vorgesehenen Empfängers der Ware erfolgt und dass die Ware an eine von der postalischen Adresse des Empfängers verschiedene Ausgabestelle zur Abholung bereitgestellt wird.

Hierbei ist es besonders vorteilhaft, mehrere Ausgabestellen vorzusehen, die jeweils ein oder mehrere Exemplar/e im Wesentlichen gattungsgleicher Waren zur Abholung bereithalten.

Hierdurch ist es möglich, die Flexibilität der Warenausgabe zu erhöhen.

Zur Erhöhung der Flexibilität ist es ferner vorteilhaft, die in dem Informationsträger gespeicherten Informationen zu der auszuliefernden Ware als Kennungsinformation zu gestalten.

Die Zuordnung der Ware zu der Kennungsinformation kann flexibel erfolgen, beispielsweise in Abhängigkeit eines festlegbaren Zeitraums, beispielsweise monatlich, während einer Saison oder während des Zeitraums einer Sonderaktion.

Die Zuordnung der Ware zu den im Informationsträger gespeicherten Informationen ist bei Einsatz der Kennungsinformationen somit flexibel gestaltbar.

Um diese Flexibilität sicherzustellen, ist es vorteilhaft, dass wenigstens eine der Ausgabestellen, vorzugsweise mehrere Ausgabestellen, insbesondere im Wesentlichen sämtliche Ausgabestellen so ausgestattet ist/sind, dass sie mit Zuordnungsinformationen betreibbar ist/sind, wobei die Zuordnungsinformationen der Kennungsinformation flexibel wenigstens einem oder mehreren vorgebbarem/n Kriterium/Kriterien entsprechender Ware zuzuordnen sind.

Um derartige Zuordnungen zu ermöglichen und auch die weiteren dargestellten Bearbeitungsvorgänge vornehmen zu können, ist der Einsatz wenigstens einer Datenbank vorteilhaft.

Die Datenbank kann auf voneinander verschiedene Weisen realisiert werden.

Beispielsweise ist es möglich, Kategorien von Ausgabestellen zu bilden und vorzusehen, dass jede dieser Ausgabestellen wenigstens ein Exemplar der auszuliefernden Ware enthält.

Eine derartige Ausgestaltung ist insbesondere dann vorteilhaft, wenn die auszuliefernde Ware in einer größeren Stückzahl über das System vertrieben werden soll.

Bevorzugte Stückzahlen reichen von mehreren hundert im Wesentlichen oder vollständig gleichartigen Waren bis hin zu mehreren hunderttausend zu verteilenden Waren.

In einer anderen zweckmäßigen Ausführungsform der Erfindung ist die Datenbank mit einem Warenwirtschaftssystem verbunden beziehungsweise noch vorteilhafter in das Warenwirtschaftssystem integriert. Die Verbindung mit dem Warenwirtschaftssystem beziehungsweise die Integration in das Warenwirtschaftssystem erhöhen - auch bei geringen Stückzahlen der auszuliefernden Waren - die Verfügbarkeit der auszuliefernden Ware an den Ausgabestellen.

Entsprechende Warenwirtschaftssysteme sind im Stand der Technik bekannt.

Ein besonders bevorzugtes Warenwirtschaftssystem steuert warenorientierte dispositive, logistische oder abrechnungsbezogene Prozesse für die Durchführung der Warenauslieferungen.

Ein Warenwirtschaftssystem ist insbesondere ein System mit einer, mehreren oder sämtlichen der nachfolgenden Komponente/n:
- Verkauf mit Angebot, Auftrag, Lieferschein, Rechnung. Erweitert auch mit Auftragsbestätigung, Werkstattauftrag, Lagerausgabebeleg, Stornorechnung, Kundenverfolgung für die Verwaltung von Informationen zur Kundenpflege (Customer Relationship Management, CRM).
- Lagerhaltung mit Bestandsführung, Mindestbestand. Anhand der Daten des Verkaufes und des Einkaufes (Zugang vom Lieferanten) erfolgt die interne Bestandsführung im Warenwirtschaftssystem.
- Einkauf mit Bestellvorschlagsermittlung, Bestellung. Anhand der Daten vom Verkauf (bestellte Ware, verkaufte Ware) und der Daten der eigenen Lagerhaltung kann ein WWS automatisiert Bestellvorschläge ermitteln bzw. eine Bestellung auslösen.

Ferner ist es vorteilhaft, dass das Warenwirtschaftssystem einen oder mehrere der nachfolgenden Bestandteile enthält:
- Verwaltung von Verkaufsfilialen,
- Datenaustausch über standardisierte Schnittstellen (z. B. Datanorm, Datev, Ebay, Online-Shop),
- statistische Auswertungen der Daten aus dem Warenwirtschaftssystem,
- Schnittstelle zu einem Produktionsplanungs- und -steuerungssystem (PPS).

Die in dem Warenwirtschaftssystem verarbeiteten beziehungsweise gespeicherten Informationen können bei der Erstellung der Postsendungen berücksichtigt werden. Besonders zweckmäßig ist eine Einbeziehung der in dem Warenwirtschaftssystem erfassten Ausgabestellen über eine Schnittstelle zum Übermitteln von Informationen über die Ausgabestellen an eine Druckkomponente.

Auch eine Übertragung von Informationen über ein abzuholendes Warenstück oder mehrere abzuholende Warenstücke von dem Warenwirtschaftssystem an den in die Postsendung zu integrierenden beziehungsweise mit der Postsendung verbindbaren Informationsträgern ist vorteilhaft.

Ferner ist es zweckmäßig, die für den Versand der Informationsträger dienenden Postsendungen möglichst weitgehend automatisiert zu erstellen.

Ein besonders bevorzugtes System zum automatisierten Erstellen der Postsendungen wird von der Deutschen Post AG unter der Bezeichnung "Mailing Factory" bereitgestellt.

Für die Erstellung der Postsendungen eignen sich insbesondere Bearbeitungsschritte, die in einem anderen technischen Zusammenhang (Integration von mobil aufgenommenen Bildern in die Postsendungen) in der Deutschen Patentschrift DE 103 24 538 dargestellt werden.

Eine Modifikation dieses bekannten Systems für den vorliegenden neuen technischen Effekt erfolgt in besonders vorteilhafter Weise durch ein Verknüpfungselement, das so ausgestattet ist, dass es Informationen über die auszuliefernde Ware mit den postalischen Adressangaben des Empfängers verknüpft.

Zur weiteren Verbesserung der automatisierten Erstellung der Postsendungen ist es vorteilhaft, dass das Warenauslieferungssystem beziehungsweise die Versandkomponente eine Aufbereitungskomponente für eine Aufbereitung der Adressdaten des Empfängers zu einem Druckauftrag enthalten.

Ferner ist es zweckmäßig, eine Schnittstelle zum Übermitteln der postalischen Adressangaben an eine Druckkomponente vorzusehen.

Vorzugsweise ist die Druckkomponente so ausgestattet, dass sie die Postsendung oder einen mit der Postsendung verbindbaren Adressdatenträger bedrucken kann. Ein Bedrucken der Postsendung erfolgt zweckmäßigerweise mit bekannten Druckverfahren. Ein Bedrucken der Postsendung mit den postalischen Adressangaben ist insbesondere dann zweckmäßig, wenn die Postsendung weitere gewünschte Inhalte, insbesondere den Informationsträger mit den Informationen über wenigstens eine auszuliefernde Ware bereits enthält.

Es ist jedoch gleichermaßen möglich, zunächst die Postsendung zu bedrucken und anschließend den Informationsträger einzubringen.

Ferner ist es möglich, die Adressangaben auf ein der Postsendung beizufügendes Schreiben zu drucken, so dass dieses auf bekannte Weise in einem Anschriftenlesefeld der Postsendung lesbar ist.

Ferner ist es zweckmäßig, eine Schnittstelle zum Übermitteln von Informationen über die Ausgabestellen an die Druckkomponente oder eine weitere Druckkomponente vorzusehen.

Vorteilhafterweise sind die Druckkomponente oder die weitere Druckkomponente so ausgestattet, dass sie eine Postsendung und/oder ein der Postsendung beifügbares Schreiben mit den Informationen über eine oder mehrere Ausgabestelle/n bedrucken können.

Eine besonders bevorzugte Ausführungsform der Erfindung sieht vor, dass eine Schreibkomponente zum Schreiben der Informationen zu der auszuliefernden Ware auf einen Informationsträger in maschinenlesbarer Form dient.

Die Schreibkomponente kann dabei unterschiedliche Eigenschaften aufweisen und sich dabei beispielsweise als eine Druckeinheit oder als eine elektromagnetische Sendeeinheit ausgestaltet sein.

Ein besonders bevorzugtes Ausführungsbeispiel einer elektromagnetischen Sendeeinheit - eine Sendeeinheit im Radiofrequenzbereich (im kHz-Bereich bis in den GKZ- oder den THz-Bereich) - ermöglicht, Transponder elektromagnetisch zu beschreiben.

Die Informationen können so ausgestattet sein, dass sie von einer beliebigen im gleichen Frequenzbereich arbeitenden elektromagnetischen Leseeinheit gelesen und ausgewertet werden können.

Um eine missbräuchliche Erzeugung der Informationen zu verhindern, ist es vorteilhaft, diese zu verschlüsseln.

Grundsätzlich ist es hierbei vorteilhaft, dass die Erzeugung und die Bearbeitung der maschinenlesbaren Informationen über die auszuhändigenden Waren entsprechend der in dieser Anmeldung dargestellten Handhabung der PayMarks erfolgt.

Es sind jedoch gleichfalls andere Methoden der Erzeugung und Verarbeitung der verschlüsselten Informationen zweckmäßig.

Beispielsweise eignen sich auch bei der Erzeugung digitaler Informationen für Freimachungsvermerke bekannte Verfahren zur Erzeugung, Verarbeitung und gegebenenfalls Auswertung der in dem Informationsträger enthaltenen Informationen.

Bezüglich vorteilhafter Ausführungsformen der digitalen Freimachungsvermerke wird vollinhaltlich auf folgendes Dokument Bezug genommen: S36-3 Draft H Digital postage marks (DPM) - Applications, security & design; Universal Postal Union - International Bureau, Standards Programme 3000, Bern 15, Schweiz.

Eine besonders bevorzugte Ausführungsform des erfindungsgemäßen Warenauslieferungssystem, des erfindungsgemäßen Verfahrens zum Ausliefern von Waren sowie der erfindungsgemäßen Versandkomponente zeichnen sich durch eine Schreibkomponente aus, die so ausgestaltet ist, dass sie einen zwei- oder dreidimensionalen Code als maschinenlesbare Information drucken kann und dass ein bedrucktes Objekt als Informationsträger für die Informationen über die auszuliefernden Waren dient.

Die Gestaltung des bedruckten Objekts als eine graphisch erkennbare Angabe zu der auszuliefernden Ware ist besonders vorteilhaft.

Hierdurch ist es möglich, dass der Empfänger der Postsendung unmittelbar Angaben zu der auszuliefernden Ware beziehungsweise den auszuliefernden Waren enthält.

Die Informationen können sowohl sehr konkret als auch in allgemeiner Form gehalten sein.

Sehr konkrete Informationen eignen sich insbesondere bei einer Integration der Erfindung in elektronische Bestellsysteme, bei denen der Empfänger möglichst detaillierte Informationen über die auszuliefernde Ware wünscht.

Eine andere bevorzugte Ausführungsform der Erfindung sieht jedoch vor, die Informationen über die auszuliefernde Ware möglichst allgemein zu halten.

Hierdurch lässt sich ein Überraschungseffekt für den Empfänger der Warensendung realisieren. Dies ist insbesondere dann vorteilhaft, wenn die Erfindung als ein Belohnungssystem und/oder zum Belohnen der Empfänger genutzt wird.

In diesem Fall erhält der Empfänger beispielsweise die Information, dass in einem oder mehreren Geschäften und/oder an einer oder mehreren Ausgabestellen auszuliefernde Waren für ihn bereitstehen.

Die graphisch erkennbaren Angaben zu den auszuliefernden Waren können auf vielfältige Weise gestaltet sein. Beispielsweise kann eine graphische Wiedergabe der Ware oder eines sie repräsentierenden Symbols auf der Postsendung selber erfolgen. Ferner sind auch graphische Darstellungen auf einem Etikett oder auf einem der Postsendung beigefügten Schreiben zweckmäßig.

Die Gestaltung der graphischen Informationen kann auf verschiedene Weisen erfolgen.

Es ist jedoch besonders zweckmäßig, dass die zum Drucken der graphischen Informationen dienende Druckkomponente oder die weitere Druckkomponente gleichfalls als Schreibkomponente zum Beschreiben des Informationsträgers mit den Informationen über die auszuliefernde Ware in maschinenlesbarer Form dienen.

Eine andere bevorzugte Ausführungsform der Erfindung zeichnet sich dadurch aus, dass die Schreibkomponente einen Sender für elektromagnetische Strahlung enthält und dass ein mit der Postsendung verbundener oder verbindbarer Transponder als Informationsträger für die Informationen zu den auszuliefernden Waren dient.

Die mit dem Informationsträger versehene Postsendung wird auf üblichem postalischem Weg zu dem Empfänger transportiert.

In einem weiteren Transportvorgang erfolgt der Transport der Ware zu der Abholstelle.

Auch eine Trennung der Datenverarbeitungsvorgänge für den Transport der Postsendung von den Datenverarbeitungsvorgängen für die Ware ist zweckmäßig, weil sich hierdurch der Datenverarbeitungsaufwand erheblich reduziert. Eine derartige Trennung ist jedoch nicht erforderlich.

Der Transport der Waren an die Ausgabestellen erfolgt in einer besonders bevorzugten Ausführungsform der Erfindung getrennt von der Beförderung der Postsendungen an die vorgesehenen Empfänger der Warensendungen.

Ferner ist es zweckmäßig, den Transportvorgang des Informationsträgers zu dem vorgesehenen Empfänger der Ware und den Transport der Ware über getrennte

Transportprozesse und vorzugsweise auch mit einer voneinander entkoppelten Versandlogistik durchzuführen.

Hierdurch ist es möglich, den erforderlichen Datenübertragungsaufwand zu reduzieren.

Erfindungsgemäß ist es auch möglich, in den Informationsträgern Informationen zu Abholstellen zu speichern, an denen jeweils wenigstens ein Exemplar der Ware zur Abholung bereitsteht.

Dies ist besonders dann vorteilhaft, wenn durch die Erfindung mehrere gleichartige oder gleiche Waren - insbesondere Serienprodukte - an mehrere Empfänger verteilt werden sollen.

Beispielsweise können hierdurch Serienprodukte an Endverbraucher ausgehändigt werden.

Sowohl diese Ausführungsform als auch die weiteren Ausführungsformen der Erfindung ermöglichen wahlweise eine Bezahlung durch den Empfänger - vorzugsweise eingeleitet während des Bestellvorgangs der Ware - als auch durch andere Personen - beispielsweise einen Verkäufer bei einer Internet-Auktion oder als Geschenk an den Empfänger.

Eine besonders vorteilhafte Ausführungsform der Erfindung zeichnet sich dadurch aus, dass bei wenigstens einem Versandereignis eine Benachrichtigung des Empfängers erfolgt.

Der Begriff "Versandereignis" bezeichnet ein Ereignis, das in Zusammenhang mit einem der Verfahrensschritte bei der Erstellung, Verarbeitung und/oder dem Empfang der Postsendung steht.

Zweckmäßigerweise wird hierbei überprüft, ob eine oder mehrere vorgebbare Bedingungen an den Erstellungs-, Beförderungs- oder Auslieferungszustand der Postsendung erfüllt sind. Als Ergebnis der Auswertung dieser wenigstens einen Bedingung wird eine automatisierte Erzeugung der Benachrichtigung bewirkt.

Ein besonders bevorzugtes Versandereignis ist das Speichern der Informationen auf dem Informationsträger.

Hierbei ist es möglich, die elektronische Benachrichtigung des Empfängers vor dem Speichern der Informationen auf den Informationsträger, während des Speicherns der Informationen auf den Informationsträger oder im Anschluss an die Speicherung der Informationen auf dem Informationsträger vorzunehmen.

Geeignete Mittel für eine elektronische Benachrichtigung sind sämtliche Arten digital übermittelter Informationen, beispielsweise eine E-Mail, eine SMS, eine MMS, eine Telnet-Nachricht oder eine andere elektronisch übermittelbare Information.

Die dargestellten Benachrichtigungen können bei einem oder mehreren der Versandereignisse erfolgen.

Es ist besonders vorteilhaft, dass überprüft wird, ob eine Einlieferung der Postsendung in ein Postsendungs-Verarbeitungssystem erfolgt und dass bei einer Erfassung der Einlieferung der Postsendung die Benachrichtigung des Empfängers der Postsendung erfolgt.

Ferner ist es vorteilhaft, dass bei einer Verarbeitung der Postsendung in einer Postsendungsbearbeitungsmaschine eine Identifizierung der Postsendung und/oder des in ihr enthaltenen Informationsträgers erfolgt.

Zweckmäßigerweise folgt auf Grundlage der Identifizierung der Postsendung und/oder des in ihr enthaltenen Informationsträgers die Benachrichtigung des Empfängers der Postsendung.

Beispiele für besonders vorteilhafte einsetzbare Postbearbeitungsmaschinen sind Aufstellmaschinen und/oder Sortieranlagen.

Die Integration der Erfassung in den Bearbeitungsvorgang der Postsendungen hat den Vorteil, dass mit einem geringen Bearbeitungsaufwand eine Vielzahl von Postsendungen und/oder in ihnen enthaltenen Informationsträgern festgestellt werden kann, sodass eine Integration der Benachrichtigung in eine Massenverarbeitung von Postsendungen ermöglicht wird.

Insbesondere ist es hierdurch möglich, diese vorteilhafte Weiterbildung der Erfindungen auf einfache Weise in Brief- oder Paketzentren zu integrieren.

Ein anderes für die Erzeugung der Benachrichtigungen auswertbares Versandereignis ist ein Einwurf der Postsendung in einen Briefkasten des Empfängers.

Die dargestellten Verarbeitungsvorgänge für die Postsendungen können - abhängig von den jeweils gewünschten Ausführungsbedingungen - wahlweise sowohl in Kombination mit der Lieferung der Ware beziehungsweise der Waren zu den Ausgabestellen als auch hiervon entkoppelt erfolgen.

Erfindungsgemäß ist wenigstens eine Ausgabestelle für Waren vorgesehen.

Es ist besonders zweckmäßig, dass das System mehrere Ausgabestellen enthält.

Es ist besonders vorteilhaft, dass die Ausgabestellen wenigstens teilweise gleiche oder gleichartige Waren enthalten.

Zweckmäßigerweise sind die Ausgabestellen so ausgestattet, dass sie jeweils wenigstens einen Signalgeber enthalten, der mit einer Leseeinheit zum Lesen der in dem Informationsträger gespeicherten Informationen verbunden ist.

Für den Fall, dass der Informationsträger die Informationen über die auszuliefernde Ware beziehungsweise die auszuliefernden Waren in graphischer Gestalt enthält - beispielsweise in Form eines ein- oder zweidimensionalen Barcodes - ist es zweckmäßig, dass die Leseeinheit ein CCD-Element - beispielsweise einen CCD-Sensor oder eine CCD-Kamera - enthält.

Ein Charge-coupled Device (CCD) ist ein lichtempfindliches elektronisches Bauteil zur ortsauflösenden Messung der Lichtstärke. CCDs sind meistens aus Halbleitern aufgebaut.

Das Bauteil besteht vorzugsweise aus einer Matrix oder einer Zeile mit lichtempfindlichen Zellen, die Pixel (picture elements) genannt werden. Aus jeder Zelle wird die der Lichtmenge proportionale Ladung (Charge) ausgekoppelt (coupled) und dann zur weiteren Verarbeitung gespeichert.

Bei einer Videokamera unterscheidet man zwischen Frame Transfer- (FT), Interline Transfer- (IT) und Frame Interline Transfer-Verfahren (FIT). Diese koppeln die Ladungen von den lichtempfindlichen Zellen zu den Speicherzellen in unterschiedlicher Weise aus. Sie unterscheiden sich insbesondere in der Koppelzeit.

Der CCD-Chip einer Digitalkamera besteht aus einer Matrix ("Array") von 100.000 bis zu mehreren 10 Millionen lichtempfindlichen Zellen, die den Pixeln des aufgenommenen Bildes entsprechen. Sie sind rechteckig oder quadratisch mit einer Kantenlänge von üblicherweise mehreren µm. Dazwischen verlaufen feine elektrische Leitungen, die zwar eine Lichteinbuße bedeuten, aber zum Auslesen und zur Abschirmung überbelichteter Zellen dienen. Größere Pixel bedeuten deshalb höhere Lichtempfindlichkeit, aber geringere Auflösung und dadurch unschärfere Bilder. Bei diesem Prozess entstehen jedoch nur Graustufenbilder.

Statt lichtempfindlicher Flächen sind auch CCD-Linien, so genannte "Stripes" geeignet.

Ein Einsatz dieser Stripes genannten Detektoren eignet sich insbesondere für den Anwendungsfall, dass ein eindimensionaler Code ausgelesen wird oder dass eine Relativbewegung zwischen dem Sensor und der graphisch wiedergegebenen Information erfolgt.

Es ist jedoch besonders vorteilhaft, Sensoren in Array-Gestalt einzusetzen, da hierdurch eine unmittelbare Erfassung der optischen Informationen in einem einzelnen Verfahrensschritt möglich ist.

Bei einem Einsatz von Transpondern als Informationsträger kommt eine Vielzahl von Lesegeräten in Betracht.

Es werden jeweils auf die Wellenlänge der elektromagnetischen Strahlung der Transponder abgestimmte Antennen eingesetzt.

Die Möglichkeit, mehrere Transponder kurz hintereinander auszulesen, ergibt entsprechende Anforderungen an die jeweils einzusetzende Leseeinheit.

Es ist besonders vorteilhaft, die Leseeinheit mit der aus dem Stand der Technik bekannten BRM-Funktion auszustatten.

Die BRM-Funktion (Buffered Read Mode = Datenfilterung und -speicherung) stellt sicher, dass die Daten bereits ausgelesener Transponder im Leser zwischengespeichert und nur einmal ausgelesen werden. Dieser Vorteil kommt bei Anwendungen mit Pulkerkennung (Antikollision) zum Tragen, da immer nur "neue" Transponder ausgelesen werden. So steigt die Übertragungsgeschwindigkeit der Daten.

Die auf diese Weise erfassten Informationen werden anschließend weiter verarbeitet.

Falls die Informationen verschlüsselt waren, ist es zweckmäßig, dass sie wenigstens teilweise entschlüsselt werden, so dass eine Einbeziehung in die weiteren Verarbeitungsschritte möglich ist.

Auf Grundlage der in dem Informationsträger enthaltenen Informationen wird ein Signalgeber gesteuert.

Der Signalgeber ist so ausgestaltet, dass er eine Zuordnung der auszuliefernden Ware auf Grundlage der maschinenlesbaren Information bewirkt.

Der Signalgeber kann auf verschiedene Weise ausgestattet sein.

In einer ersten einfachen Ausführungsform steuert der Signalgeber eine optische Anzeige. Die optische Anzeige kann beispielsweise Angaben zu den Waren und/oder eine Abbildung der Waren umfassen.

Es ist jedoch gleichfalls möglich, dass der Signalgeber ein Öffnen eines Faches, beispielsweise einer elektronischen Paketfachanlage, steuert.

Ferner ist es möglich, dass der Signalgeber eine Zufuhr der Ware zu einem Warenausgabeschacht steuert.

Die Zufuhr der Ware zu dem Warenausgabeschacht kann beispielsweise durch Einsatz eines Förderbandes und/oder eines Greifarmes erfolgen.

Ferner ist es zweckmäßig, den Signalgeber mit einem Materialfluss-Steuerungsrechner eines im Bereich der Abholstelle befindlichen Warenlagers zu verbinden.

Das Warenlager kann grundsätzlich auf bekannte Weise gestaltet sein, beispielsweise als ein Regallager oder als ein Paternoster-Lager.

Weitere Vorteile, Besonderheiten und zweckmäßige Weiterbildungen der Erfindung ergeben sich aus den Unteransprüchen und der nachfolgenden Beschreibung bevorzugter Ausführungsbeispiele der Erfindung anhand von Zeichnungen.

Von den Zeichnungen zeigt
- Fig. 1: eine Prinzipdarstellung einer mit einer erfindungsgemäßen Bestellkomponente verbundenen erfindungsgemäßen Versandkomponente;
- Fig. 2: eine Darstellung eines besonders bevorzugten Ausführungsbeispiels des erfindungsgemäßen Systems;
- Fig. 3: eine Darstellung einer zweiseitigen Druckversion einer mit dem erfindungsgemäßen Verfahren und System erzeugten Postkarte und
- Fig. 4: eine Prinzipdarstellung einer erfindungsgemäßen Ausgabestelle.

Das erfindungsgemäße Warenauslieferungssystem, das erfindungsgemäße Verfahren zum Ausliefern von Waren und die erfindungsgemäße Versandkomponente sind vorzugsweise mit einer geeigneten Bestellkomponente verbunden.

Zweckmäßigerweise enthält das Warenauslieferungssystem ein Verknüpfungselement, wobei das Verknüpfungselement so ausgestattet ist, dass es Informationen über die auszuliefernde Ware mit Adressangaben des Empfängers verknüpft.

Diese Verknüpfung geschieht in einer besonders bevorzugten Ausführungsform der Erfindung durch ein Zusammenwirken mit einem computerbasierten Bestellsystem.

Das Computersystem kann verschiedenartig beschaffen sein. Beispielsweise ist es möglich, einen Materialfluss-Steuerungsrechner vorzusehen, der Informationen über vorhandene Waren mit Informationen über Zielorte verknüpft.

Ohne Beschränkung der Allgemeinheit des erfindungsgemäßen Warenauslieferungssystems sind elektronische Bestellsysteme unter Einsatz von Computernetzwerken, insbesondere des Internets, besonders bevorzugt.

Bestellvorgänge in dem Computernetzwerk erfolgen zweckmäßigerweise durch ein hierfür geeignetes Datenübertragungsprotokoll. Besonders bevorzugte Beispiele hierfür sind E-Mails und das World Wide Web ("WWW"). Die WWW-Dienste beinhalten insbesondere eine Kommunikation zwischen einem Client und einem Webserver. Zum Erfassen von Informationen erfolgen Aufforderungen nach einem geeigneten Protokoll, insbesondere dem HyperText Transfer Protokoll ("HTTP"). die Webseite wird vorzugsweise unter Verwendung eines Browsers angezeigt.

Dateninhalte werden vorzugsweise unter Einsatz der HyperText Markup Language ("HTML") verarbeitet.

Besonders bevorzugt ist ein Einsatz der Extensible Markup Language. Die Extensible Markup Language, abgekürzt XML, ist ein Standard zur Erstellung maschinen- und menschenlesbarer Dokumente in Form einer Baumstruktur. XML definiert dabei die Regeln für den Aufbau solcher Dokumente. Für einen konkreten Anwendungsfall ("XML-Anwendung") müssen die Details der jeweiligen Dokumente spezifiziert werden. Dies betrifft insbesondere die Festlegung der Strukturelemente und ihre Anordnung innerhalb des Dokumentenbaums. XML ist damit ein Standard zur Definition von beliebigen, in ihrer Grundstruktur jedoch stark verwandten Auszeichnungssprachen.

Die Namen der einzelnen Strukturelemente (XML-Elemente) für eine konkrete XML-Anwendung lassen sich frei wählen. Ein XML-Element kann ganz unterschiedliche Daten enthalten bzw. beschreiben, als prominentestes Beispiel Text, aber auch Graphiken oder abstraktes Wissen. Ein Grundgedanke hinter XML ist es, Daten und ihre Repräsentation zu trennen.

Vorzugsweise unter Einsatz strukturierter Bestellelemente werden käuferspezifische Bestellinformationen, die vorzugsweise mit einem Clientsystem assoziiert sind, mit den Bestellinformationen für die auszuliefernde Ware kombiniert. Ferner erfolgt eine Verknüpfung mit wenigstens einer postalischen Adressangabe des vorgesehenen Empfängers der Ware.

Im Unterschied zu den bekannten Bestellsystemen wird die auszuliefernde Ware jedoch nicht an die erfasste postalische Adressangabe des Empfängers geschickt. Stattdessen erfolgt in einer besonders bevorzugten Ausführungsform der Erfindung lediglich der Transport eines Informationen in maschinenlesbarer Form enthaltenden Informationsträgers an die postalische Adresse des Kunden, während die Ware an einem anderen Ort bereitgestellt wird.

Das Verfahren ist durch verschiedene Schritte gekennzeichnet, an deren Anfang die Generierung von Auftragsdaten mittels eines Endgerätes steht, wobei die Auftragsdaten aus wenigstens einer Bestellinformation und wenigstens einer Zustellinformation bestehen.

Die Auftragsdaten werden an eine Verarbeitungskomponente des Warenauslieferungssystems übermittelt. Anschließend werden die Auftragsdaten an eine Prüf- und Bearbeitungskomponente übergeben. Die Auftragsdaten werden in der Prüf- und Bearbeitungskomponente geprüft, bearbeitet und daraufhin einer Schnittstelle des Versanddienst-Systems übermittelt. Zuvor werden die Auftragsdaten in einer Datenbank gespeichert. Insbesondere fehlerhafte Daten oder Daten, bei deren Übertragung zu der Schnittstelle Fehler aufgetreten sind, werden in der Datenbank entsprechend abgelegt. Von der Schnittstelle werden die Daten einer zweiten Datenbank übergeben, wobei die Datenbank zu dem Versanddienst-System gehört. Die Datenbank steht in Verbindung mit einer Aufbereitungskomponente, welche die Auftragsdaten zu einem Schreibauftrag zum Schreiben der Informationen zu der auszuliefernden Ware in maschinenlesbarer Form auf einen Datenträger aufbereitet. Daraufhin erfolgt eine Übermittlung des Schreibauftrags an eine Schreibkomponente zum Schreiben der Informationen zu der auszuliefernden Ware und die Erstellung einer Postsendung unter Integration des Informationsträgers. Die erzeugte Postsendung wird an ein Distributionssystem übergeben.

Eine Übertragung geldwerter Informationen für auszuliefernde Waren und/oder die Versanddienstleistung - Postversand der Postsendung - werden über eine Abrechnungskomponente des Versanddienstsystems abgerechnet.

Die Abrechnung der erbrachten Leistungen kann auf verschiedene Weisen erfolgen.

Es ist jedoch besonders vorteilhaft, eine Abrechnungskomponente zu integrieren, die eine schnelle und zuverlässige Abrechnung der erbrachten Leistungen ermöglicht.

Insbesondere ist ein Einsatz elektronischer Zahlungssysteme zweckmäßig.

Besonders vorteilhaft sind Abrechnungskomponenten, die geldwerte Informationen verarbeiten.

Zweckmäßigerweise werden die geldwerten Informationen von einem Auftraggeber der Leistungen - insbesondere der Transportleistung und der Aushändigung der Ware - von einer Ladestelle geladen und zur Bezahlung dieser Leistungen eingesetzt.

Die Ladestelle dient hierbei als ein Wertübertragungszentrum.

Eine besonders bevorzugte Ausführungsform der Erfindung beinhaltet, dass eine Abrechnung entsprechend den in der Europäischen Patentschrift EP 1 279 132 B1 dargestellten Verfahren erfolgt.

Der Auftraggeber für die dargestellten Leistungen lädt hierzu in der Ladestelle geldwerte Informationen. Zweckmäßigerweise erfolgt hierzu eine Authentisierung des Auftraggebers.

Nach der vorgenommenen Authentisierung des Auftraggebers wird in der Ladestelle eine Zufallszahl und eine Zahlungsidentifikationsnummer Pay-ID PID gebildet, die Informationen zu dem Besteller enthält.

Anschließend werden die Zufallszahl und die Pay-ID PID auf die in der Europäischen Patentschrift EP 1 279 132 B1 dargestellte Weise verschlüsselt.

Anschließend werden in einem Kryptomodul die vorgenannten - zweckmäßigerweise verschlüsselten - Informationen gespeichert.

Ferner werden in das Kryptomodul Informationen zu der auszuliefernden Ware - zweckmäßiger Weise zumindestens ihr Preis - eingegegeben.

Anschließend erzeugt das Kryptomodul unter Einsatz der dargestellten Daten einen Hash-Wert.

Das Kryptomodul (auch kryptographisches Modul genannt) ist vorzugsweise so ausgestattet, dass in ihm Daten ungesichert verarbeitet werden können.

Das kryptographische Modul zeichnet sich dadurch aus, dass es in seinem Inneren elektronische Daten beinhaltet oder Daten verarbeitet, die von außen nicht unbemerkt eingesehen oder manipuliert werden können.

Ein kryptographisches Modul kann als sichere, versiegelte Einheit betrachtet werden, in der sicherheitsrelevante Prozesse durchgeführt werden, die von außen nicht manipuliert werden können. Ein weltweit anerkannter Standard für solche kryptographischen Module ist der von der US-amerikanischen nationalen Behörde für Standardisierung NIST veröffentlichte Standard für kryptographische Module mit der Bezeichnung FIPS Pub 140, veröffentlicht als "FIPS PUB 140-1 (Supersedes FIPS PUB 140 1982 April 14), Federal Information Processing Standards Publication 140-1, 1994 January 11, SECURITY REQUIREMENTS FOR CRYPTO-GRAPHIC MODULES" und herausgegeben vom National Institute of Standards and Technology (Secretary of Commerce) gemäß Section 111 (d) des Federal Property and Administrative Services Act of 1949, ergänzt durch den Computer Security Act 1987, Public Law 100-235, United States of America.

Wird zur Erstellung fälschungssicherer Datensätze, an deren Unverfälschtheit Dritte interessiert sind, ein kryptographisches Modul eingesetzt, so besteht eine vorteilhafte Realisierung darin, dass das kryptographische Modul genutzt wird, um kryptographische Schlüssel sicher zu hinterlegen, die innerhalb des Moduls, und nur dort, zur Verschlüsselung von Prüfwerten dienen. Bekannt sind beispielsweise sogenannte Signaturkarten, wie sie von Zertifizierungsbehörden oder Trustcentern zur Erstellung von digitalen Signaturen ausgegeben werden. Auch diese Signaturkarten, ausgeführt als Mikroprozessor-Chipkarte, enthalten in eben diesem Mikroprozessor-Chip ein kryptographisches Modul.

In solchen kryptographischen Modulen sind vorzugsweise ein oder mehrere asymmetrische Schlüsselpaar/e hinterlegt, die sich dadurch auszeichnen, dass Verschlüsselungen, die mit dem sogenannten privaten Schlüssel erzeugt werden, nur mit dem zugehörigen öffentlichen Schlüssel rückgängig gemacht werden können und dass Verschlüsselungen, die mit dem öffentlichen Schlüssel erzeugt werden, nur mit dem zugehörigen privaten Schlüssel rückgängig gemacht werden können. Gemäß ihrer Bezeichnung sind öffentliche Schlüssel dabei zur Veröffentlichung und beliebigen Verbreitung vorgesehen, wogegen private Schlüssel nicht ausgegeben werden dürfen und bei einer Verwendung zusammen mit kryptographischen Modulen diese Module zu keinem Zeitpunkt verlassen dürfen. Weiterhin hinterlegt in solchen Modulen sind Algorithmen etwa zur Prüfsummenbildung oder, im Beispiel der digitalen Signatur, zur Erstellung eines sogenannten digitalen Fingerabdrucks oder "Hash-Werts", der sich dadurch auszeichnet, dass er einen beliebigen Dateninhalt auf eine in der Regel quantitativ deutlich verkürzte Information derart abbildet, dass das Resultat irreversibel und eindeutig ist und dass für verschiedene Dateninhalte, mit denen der Algorithmus gespeist wird, jeweils unterschiedliche Resultate entstehen.

Unter Einsatz des Hash-Wertes wird in dem Kundensystem eine Zeichenkette mit kryptographischen Informationen erzeugt. Es ist besonders vorteilhaft, dass diese Zeichenkette die Kaufdaten im Klartext sowie zwischengespeicherte kryptographische Informationen - insbesondere die zuvor genannte Zeichenkette mit Kryptoinformationen - und den erzeugten Hash-Wert enthält. Diese Daten werden nachfolgend als PayMark bezeichnet.

Die PayMark wird an die dargestellte Versandkomponente, insbesondere an die in ihr enthaltene Verarbeitungskomponente weitergeleitet und dient dort als Nachweis für die Bonität des Auftraggebers und ermöglicht so die Abrechnung der Leistungen.

Die Abrechnung der Leistungen kann auf verschiedene Weisen erfolgen.

Es ist grundsätzlich möglich, bereits bei Auftragserteilung die PayMark in einem eCommerce-Center einzulösen und so den Bezahlvorgang unmittelbar nach Bestelleingang einzuleiten.

Es ist jedoch gleichfalls möglich, eine Abrechnung zumindestens teilweise erst nach einer Aushändigung der Ware an den Empfänger vorzunehmen.

Dies erfolgt in einer ersten zweckmäßigen Ausführungsform dadurch, dass ein Teil der geldwerten Information an die beziehungsweise an mehrere Ausgabestelle/n geschickt wird.

Es ist jedoch besonders zweckmäßig, einen Teil der geldwerten Information in den Informationsträger einzubringen, welche der Postsendung beigefügt wird.

Hierdurch wird sichergestellt, dass eine Abrechnung erst dann erfolgt, wenn der Empfänger die Ware an der Ausgabestelle erhält.

Außer der postalischen Leistung - Transport des Informationsträgers zum Empfänger -, dem gleichfalls bereits dargestellten Beschreiben des der Postsendung beigefügbaren Informationsträgers und der Übermittlung der Ware an die Ausgabestellen beziehungsweise der Auslieferung der Waren an den Ausgabestellen können weitere Leistungen erfindungsgemäß erbracht und abgerechnet werden.

Ein besonders zweckmäßiges Beispiel einer weiteren Leistung ist eine Druckleistung.

Nachfolgend wird eine besonders bevorzugte Darstellung der Druckleistung in Form des Drucks einer Postsendung und einer postalischen Leistung in Form der Beförderung und Auslieferung der Postsendung dargestellt. Für den Druck der Postsendung sollten die von einem Endgerät erzeugten Auftragsdaten wenigstens ein Bildmotiv enthalten, während die vom Benutzer angegebenen Zustellinformationen die Beförderung und Auslieferung der Sendung an den gewünschten Empfänger ermöglichen. Zusätzlich kann ein Benutzer einen Grußtext angeben. Bei dem Bildmotiv kann es sich ferner beispielsweise um eine Bild-Text-Kombination, die beispielsweise einen Grußtext enthält, handeln.

In einem besonders bevorzugten Ausführungsbeispiel der Erfindung handelt es sich bei der zu druckenden und zu versendenden Postsendung um eine Postkarte, welche einen Informationsträger mit Informationen zu der auszuliefernden Ware sowie gegebenenfalls geldwerte Informationen, eine Motivseite und eine Textseite mit Grußtext und Zustellinformationen umfasst. Bei dem verwendeten Endgerät handelt es sich beispielsweise um einen Computer oder ein mobiles Benutzergerät, beispielsweise ein Mobiltelefon.

Insbesondere ist es zweckmäßig, die Verbindung über ein Internet-Protokoll durchzuführen.

Es hat sich ferner als zweckmäßig erwiesen, Endgeräte einzusetzen, welche den Multimedia Messaging Standard (MMS) unterstützen. Durch die Übermittlung von MMS-Daten wird der Versand von Texten, Melodien, Bildern und Videosequenzen ermöglicht, wobei die Nachrichtenlänge, die Gestaltung und die Dateigröße einer MMS-Nachricht zweckmäßigerweise nicht begrenzt sind. Einem Benutzer ist es also möglich, mit einem mobilen Endgerät Auftragsdaten in Form einer MMS-Nachricht zu erzeugen, die wenigstens aus einem Bildmotiv und Zustellinformationen für eine Postsendung wie eine Postkarte bestehen. Das Bildmotiv kann dabei von dem mobilen Endgerät selbst erzeugt oder von einem weiteren Medium, wie beispielsweise einer Digitalkamera, auf dieses geladen worden sein. So kann ein Benutzer jegliche von ihm gewünschten Bildmotive in Form einer Postkarte versenden, was ihm eine große Gestaltungsmöglichkeit gibt. Auch ein Grußtext ist beispielsweise über die Tastatur eines Mobiltelefons frei eingebbar, wobei lediglich die maximale Länge des Textes begrenzt ist.

In einem besonders bevorzugten Ausführungsbeispiel der Erfindung stellt eine Abrechnungskomponente des Versanddienst-Systems die Kosten für die Speicherung der Informationen über die auszuliefernde Ware und/oder die Bereitstellung der auszuliefernden Ware an wenigstens einer Ausgabestelle und/oder die postalische Leistung sowie gegebenenfalls die Druckleistung einer zweiten Abrechnungskomponente in Rechnung, wobei die zweite Abrechnungskomponente zu einem Mobilsystem und/oder einem eCommerce-System gehört. Die für die jeweilige Leistung anfallenden Kosten werden von der Abrechnungskomponente des Mobilsystems beziehungsweise des eCommerce-Systems beglichen, welche diese wiederum einem Benutzer des Mobilsystems beziehungsweise des eCommerce-Systems in Rechnung stellt. Bei diesem Benutzer handelt es sich in einem besonders bevorzugten Ausführungsbeispiel der Erfindung um den Benutzer, der den Auftrag für die Postsendung an dem Endgerät erzeugt hat. Die Abrechnung kann beispielsweise über die Rechnung für ein verwendetes Mobiltelefon oder über die Abrechnung einer geldwerten Information über das eCommerce-Center erfolgen.

Das eCommerce-Center ist ein zentraler Bestandteil des eCommerce-Systems und ermöglicht die Abrechnung der erbrachten Leistungen.

In einem anderen Ausführungsbeispiel der Erfindung erfolgt eine Abrechnung mit einem Dritten, wobei dieser andere Benutzer beispielsweise die Rolle eines Zahlers (Sponsors) übernimmt und anderen Benutzern vollständig oder teilweise kostenlos einzelne oder mehrere der dargestellten Leistungen zur Verfügung stellt.

Das erfindungsgemäße System zur automatisierten Erzeugung von Postsendungen mit jeweils wenigstens einem Informationsträger und von postalischen Leistungen, bei dem an einem Endgerät ein Auftrag für eine zu erstellende und zu versendende Postsendung durch einen Benutzer generierbar ist, umfasst mehrere Komponenten.

Das System besteht im Wesentlichen aus wenigstens einem Bestandteil des eCommerce-Systems und/oder einem Mobilsystem in Verbindung mit einem Versanddienst-System. Es können jedoch auch weitere Komponenten integriert werden.

Grundsätzlich kommen hierbei verschiedene Kombinationen in Betracht. Insbesondere ermöglicht die Erfindung die Integration verschiedener Systeme.

Zweckmäßigerweise ist das Versanddienst-System mit wenigstens einem System verbunden, das eine Zahlungsabwicklung ermöglicht.

In einem besonders einfachen Fall ermöglicht ein eingesetztes Mobilsystem eine Abrechnung der Versanddienstleistungen.

Es ist jedoch gleichfalls zweckmäßig, ein eCommerce-System einzusetzen. Insbesondere der Einsatz der zuvor dargestellten PayMarks ist besonders vorteilhaft, da die dargestellten PayMarks eine Entkopplung zwischen dem Nachweis des Vorhandenseins einer geldwerten Information und dem Zahlungsausgleich ermöglichen. Beispielsweise kann durch den Einsatz der PayMark eine Überprüfung der Gültigkeit der geldwerten Informationen getrennt von der Einreichung der geldwerten Informationen in einer Verrechnungsstelle (eCommerce-Center) erfolgen.

Eine derartige Trennung zwischen der Gültigkeit der geldwerten Informationen und der Einlösung des geldwerten Betrages ermöglicht es beispielsweise, nach der Prüfung der Gültigkeit (Werthaltigkeit) der geldwerten Informationen die Erzeugung des Informationsträgers zu ermöglichen und/oder einen Transportvorgang der den Informationsträger enthaltenden Postsendung einzuleiten. In dieser bevorzugten Ausführungsform wird die geldwerte Information erst nach Einreichung des Informationsträgers an der Ausgabestelle weitergeleitet und somit zur Verrechnung eingesetzt.

Ein Mobilsystem wird typischerweise von einem Mobilfunkunternehmen in Form eines Mobilfunknetzes mit den zugehörigen Komponenten betrieben. Dabei können mehrere verschiedene Mobilfunknetze mit dem Versanddienst-System in Verbindung stehen. Das jeweilige Mobilsystem besteht vorzugsweise aus mehreren mobilen Endgeräten zur Generierung von Auftragsdaten, einer Verarbeitungskomponente zur Verarbeitung der Auftragsdaten und Mitteln zur Übermittlung der Auftragsdaten von dem mobilen Endgerät zu dieser Verarbeitungskomponente. Das Mobilsystem weist ferner eine Datenbank zum Speichern und Rechenmittel zur Verarbeitung von Daten und eine Abrechnungskomponente auf. Bei den Rechenmitteln handelt es sich typischerweise um wenigstens einen Server.

Typischerweise umfasst das Mobilsystem eine Vielzahl von mobilen Endgeräten, welche über Datenübertragungswege wie ein GSM-Netz oder ein UTMS-Netz in Verbindung mit einer oder mehreren Verarbeitungskomponente/n stehen.

Ein Versanddienst-System zur Beauftragung und Durchführung von Leistungen zur Erzeugung der Postsendungen und von postalischen Leistungen (insbesondere Versandleistungen) kann beispielsweise von einem Postunternehmen betrieben werden und zur Automatisierung der Vorgänge verschiedene Komponenten aufweisen.

Ein derartiges System besteht vorzugsweise aus wenigstens einer Schnittstelle zur Annahme von Auftragsdaten, einer Datenbank zur Daten- und Applikationsverwaltung, einer Aufbereitungskomponente zur Aufbereitung von Auftragsdaten in Druckaufträge, einer Druckproduktion zur Erzeugung einer Postsendung und einer Abrechnungskomponente zur Abrechnung der Druckleistung und/oder der postalischen Leistung.

Das erfindungsgemäße Gesamtsystem umfasst neben dem eCommerce-System und/oder dem Mobilsystem und dem Versanddienst-System ferner eine Prüf- und Bearbeitungskomponente zur Verarbeitung und eine Datenbank zur Speicherung von Auftragsdaten und Mittel zum Empfangen und Senden von Daten. Die Prüf- und Bearbeitungskomponente führt eine Prüfung und/oder eine Bearbeitung der Auftragsdaten nach vorgegebenen Spezifikationen durch. Vorzugsweise erfolgt dabei eine Filterung und eine Validierung der Auftragsdaten.

Als besonders zweckmäßig hat es sich erwiesen, dass die Prüf- und Bearbeitungskomponente ferner eine Konvertierung der Auftragsdaten durchführt, welche von der Schnittstelle des Versanddienst-Systems lesbar sind. In einem besonders bevorzugten Ausführungsbeispiel der Erfindung handelt es sich bei der Schnittstelle des Versanddienst-Systems um eine http-Schnittstelle. Da MMS-Daten eines mobilen Endgerätes typischerweise über ein mms- oder smtp-Protokoll übermittelt werden, erfolgt in der Prüf- und Bearbeitungskomponente eine Konvertierung der Daten und der weitere Transfer über das http-Protokoll.

Die Prüf- und Bearbeitungskomponente kann sich im Bereich des eCommerce-Systems oder des Mobilsystems oder im Bereich des Versanddienst-Systems befinden. Sie kann jedoch auch als unabhängige Komponente ausgebildet sein. Die Datenbank in Verbindung mit der Prüf- und Bearbeitungskomponente kann ebenfalls zu verschiedenen Systemen zugehörig sein.

In einem besonders bevorzugten Ausführungsbeispiel der Erfindung werden die Ergebnisse der Filterung und Validierung der Auftragsdaten in einer Datenbank gespeichert. Die Daten stehen so für weitere Verfahrensschritte zur Verfügung. Dazu zählt beispielsweise die Benachrichtigung von Benutzern, falls ein Auftrag für eine zu druckende und zu versendende Postsendung nicht durchgeführt werden konnte. Dies beinhaltet ferner die Information, dass für einen erzeugten Auftrag, welcher nicht ausgeführt werden konnte, keine oder nur teilweise eine Abrechnung über eine Abrechnungskomponente erfolgt.

Das erfindungsgemäße Verfahren und das zugehörige System zur Durchführung des Verfahrens bringen verschiedene Vorteile mit sich. Zum einen ermöglicht es Benutzern des Systems, die Versendung von einzelnen Postsendungen in Auftrag zu geben, wobei die Benutzer die Postsendung in einem hohen Maße selbst gestalten können.

Auch eine Auswahl der auszuliefernden Waren kann variabel erfolgen. Es ist jedoch zweckmäßig, eine Datenbank über generell verfügbare Waren und über an einzelne Ausgabestellen zur Verfügung stellbare Waren vorzusehen.

In einer besonders zweckmäßigen Ausführungsform der Erfindung kann der Benutzer sowohl zwischen vorgegebenen Waren als auch zwischen selbst ausgewählten Waren wählen und diese für eine Abholung an den Ausgabestellen vorsehen.

Zweckmäßigerweise enthält der Informationsträger die Informationen über die Waren, wobei in einer besonders bevorzugten Ausführungsform der Erfindung zusätzlich eine Überprüfung erfolgt, ob eine Bereitstellung der Ware an einer oder mehreren Ausgabestellen bereits erfolgt ist und/oder in einem vorgebbaren Zeitintervall möglich ist.

Auch eine Gestaltung der Bedruckung der Postsendung kann flexibel erfolgen.

Ein Benutzer kann nicht nur zwischen einer vorgegebenen Auswahl an Motiven wählen, sondern er kann auch selbst erzeugte oder von anderen Medien wie Digitalkameras erzeugte Bilder hochladen. Auch ein Grußtext ist bis auf eine Beschränkung der maximalen Länge frei vom Benutzer eingebbar. Zum anderen ist der Benutzer bei der Erzeugung eines Auftrags durch das Endgerät weitestgehend ortsungebunden. Er benötigt außerdem keine Zusatzmittel, sondern er kann ohne Modifikationen auf vorhandene Funktionen zurückgreifen.

Auch die Abrechnung entstehender Kosten für die von ihm beauftragten Leistungen ist für den Benutzer mit keinem Zusatzaufwand verbunden, da die Abrechnung vorzugsweise über seine Handyrechnung, Abbuchung von einer Prepaidkarte oder einer sonstigen Übermittlung geldwerter Informationen insbesondere unter Einsatz eines eCommerce-Centers oder von PayMarks erfolgt. Der Benutzer muss also keine Anmeldung an einem speziellen Bezahlsystem durchführen und dabei persönliche Daten angeben, welche er für den einmaligen Versand einer Postsendung eventuell nicht angeben möchte.

Es ist jedoch gleichfalls möglich, die Erfindung für eine massenhafte Versendung von mit Informationsträgern versehenen Postsendungen einzusetzen.

In diesem Fall können die zuvor dargestellten Verfahrensschritte entsprechend durchgeführt werden, wobei es jedoch besonders zweckmäßig ist, standardisierte Internet-Protokolle und Schnittstellen zwischen Datenbanken mit Informationen über eine Vielzahl von Empfängern sowie über eine Vielzahl auszuliefernder Waren einzusetzen.

Die Ausgestaltung des erfindungsgemäßen Systems und die Durchführung des erfindungsgemäßen Verfahrens können mit einer Vielzahl von Komponenten erfolgen.

Die in den Abbildungen dargestellten Komponenten sind jedoch besonders vorteilhaft.

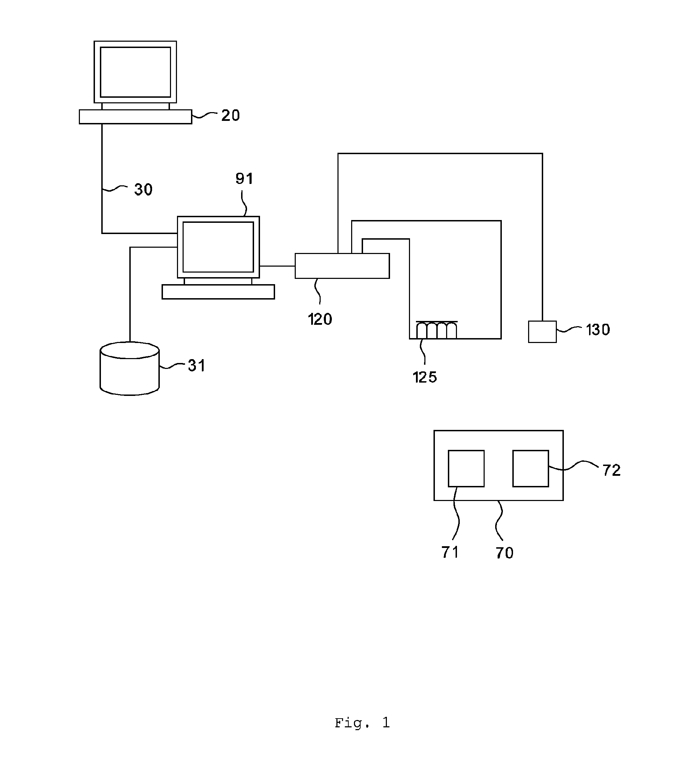

Eine besonders bevorzugte erfindungsgemäße Auftragsbearbeitung sowie eine besonders bevorzugte erfindungsgemäße Erstellung von Postsendungen sind in ihrem Grundprinzip in Fig. 1 dargestellt.

Eine Auftragskomponente 20 ist über eine Schnittstelle 30 des Versanddienst-Systems mit einem Verknüpfungselement 91 verbunden. Das Verknüpfungselement 91 ist ferner mit einer Datenbank 31 des Versanddienst-Systems sowie mit einem Schreibgerät verbunden.

Im dargestellten Fall ist das Schreibgerät als eine RFID-Steuereinheit 120 ausgebildet.

Die RFID-Steuereinheit 120 ist mit einer RFID-Antenne 125 verbunden.

Ferner ist das Schreibgerät mit einem Druckkopf 130 - beispielsweise einem Tintenstrahl-Druckkopf, einem Laserdrucker oder einem Thermotransfer-Drucker verbunden.

Durch diese dargestellten Bestandteile des Systems wird eine erfindungsgemäße Versandkomponente gebildet.

Die dargestellte Ausführung mit einer RFID-Antenne 125 zum Beschreiben eines

Informationsträgers und einem Druckkopf 130 zum Bedrucken einer Postsendung 70 ist insbesondere für Anwendungsfälle zweckmäßig, bei denen viele Informationen in dem Informationsträger gespeichert werden sollen oder in denen der Informationsträger - vorzugsweise ein Transponder - so ausgestattet ist, dass er aus einiger Entfernung (typischerweise etwa 30 cm bis 10 m) auslesbar beziehungsweise beschreibbar ist.

Es ist jedoch gleichfalls möglich, eine einfachere Ausführungsform der Versandkomponente zu realisieren. Eine derartige einfachere Ausführungsform der Versandkomponente kann beispielsweise vorsehen, dass der Druckkopf 130 auch zum Bedrucken der Postsendung 70 mit Informationen über wenigstens eine auszuliefernde Ware versehen ist.

Mit Hilfe der erfindungsgemäßen Versandkomponente kann die gleichfalls erfindungsgemäße Erzeugung einer mit einem Informationsträger über die auszuliefernde Ware beziehungsweise auszuliefernden Waren versehenen Postsendung beispielhaft wie nachfolgend dargestellt erfolgen:
In der Auftragskomponente 20 werden Daten über wenigstens eine auszuliefernde Ware und über wenigstens einen Warenempfänger verarbeitet.

Diese Daten werden über die Schnittstelle 30 an die Steuerungskomponente 91 übermittelt.

Durch eine Anfrage in einer Datenbank 31 des Versanddienst-Systems kann die Richtigkeit der postalischen Adresse und/oder die Verfügbarkeit der auszuliefernden Ware - insbesondere die Verfügbarkeit an einer oder mehreren vorgesehenen Ausgabestellen - ermittelt werden.

Die Steuerungskomponente 91 des Versanddienst-Systems - beispielsweise ein Computer-Server - überprüft die Verfügbarkeit der Ware durch Abfrage in der Datenbank 31. Die Steuerungskomponente 91 ist ferner über die Schnittstelle 30 mit der Auftragskomponente 20 - beispielsweise ein über das Internet angebundener Computer oder ein über ein Mobilsystem drahtlos verbundenes Mobiltelefon - verbunden.

In der dargestellten bevorzugten Ausführungsform weist die Postsendung 70 sowohl einen Informationsträger 71 als auch Adressangaben 72 auf.

Der Informationsträger 71 ist in der dargestellten besonders bevorzugten Ausführungsform ein RFID-Tag.

Ein RFID-Tag ist ein Transponder, der Identifikationsinformationen enthält.

Es können sowohl aktive als auch passive Transponder eingesetzt werden.

Ein Einsatz von aktiven Transpondern ist mit dem Vorteil verbunden, dass sie über eine größere Entfernung gelesen beziehungsweise beschrieben werden können und dass sie in der Lage sind, passive Leseeinheiten zu aktivieren.

Ein Einsatz von aktiven Transpondern ist mit dem besonderen Vorteil verbunden, dass sie besonders klein und leicht sind und somit besonders einfach in Postsendungen - insbesondere Postkarten - integriert werden können.

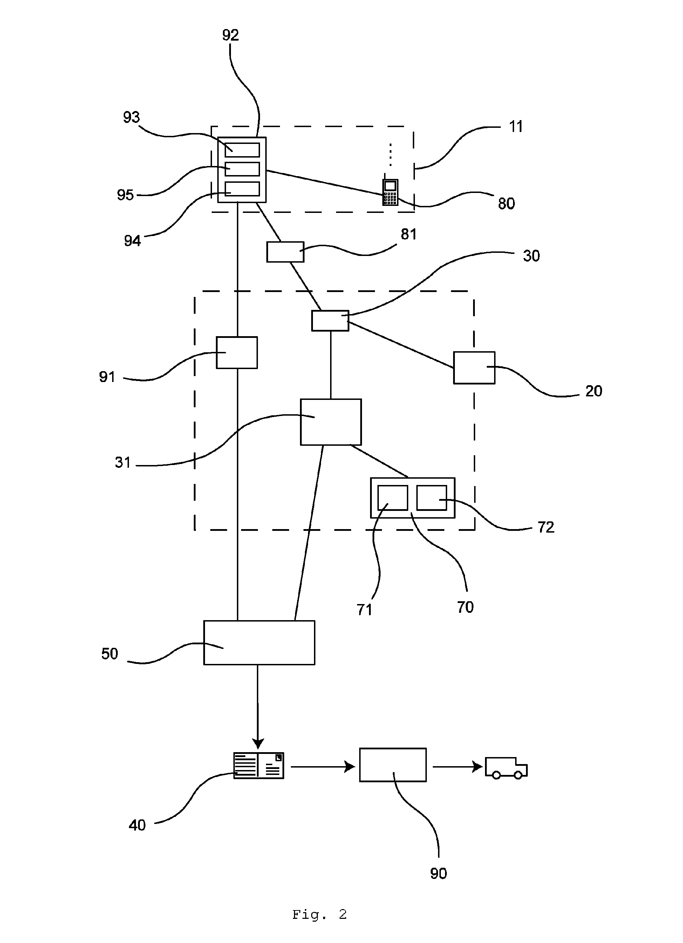

Fig. 2 zeigt ein besonders bevorzugtes Ausführungsbeispiel des erfindungsgemäßen Systems zur automatisierten Beauftragung von Druckdienstleistungen und postalischen Leistungen über ein mobiles Endgerät 80. Das System besteht wenigstens aus einem Versanddienst-System 10 und einem Mobilsystem 11. In der Darstellung sind die jeweiligen Systeme durch gestrichelte Linien gegen andere Komponenten abgegrenzt, um zu verdeutlichen, welche Komponenten zum Betrieb der einzelnen Systeme vorteilhaft sind. Verschiedene Komponenten können jedoch auch ausgegliedert oder zusätzlich integriert werden.

Das Kernstück des Versanddienstsystems 10 wird durch eine Datenbank 31 gebildet, welche zur Datenablage und zum Datenretrieval dient und in Verbindung mit verschiedenen Komponenten des Systems steht. Die gesamte Datenhaltung findet vorzugsweise in einer relationalen Datenbank statt. Als Datenbank hat sich beispielsweise eine Oracle-Datenbank als zweckmäßig erwiesen. Die Datenbank steht in Verbindung mit einer Schnittstelle 30, über welche Daten von verschiedenen Auftragskomponenten empfangbar sind. Zusätzlich zu der Erzeugung von Auftragsdaten über ein Endgerät 80 können beispielsweise Aufträge über eine Website mit einem zugehörigen Server erzeugt werden. Derartige alternative Mittel zur Erzeugung von Auftragsdaten sind in der Darstellung mit der Bezugsziffer 20 gekennzeichnet. Besonders vorteilhaft ist es, wenn die Auftragsdaten von verschiedenen Auftragskomponenten über die gemeinsame Schnittstelle 30 mit einem einheitlichen Protokoll von dem Versanddienst-System empfangen werden können. Dazu kann beispielsweise eine http-Schnittstelle verwendet werden.

Die Datenbank 31 steht ferner in Verbindung mit einer Aufbereitungskomponente zur Erzeugung von Druckaufträgen und einer Druckproduktion 50, welcher die erzeugten Druckaufträge zur Herstellung der Postsendungen übermittelt werden. Das System 10 umfasst ferner eine Abrechnungskomponente 91 zur Abrechnung der vom System erbrachten Druckleistung und der postalischen Leistung.

Die Aufbereitungskomponente des Versanddienst-Systems 10 umfasst vorzugsweise wenigstens zwei Komponenten, welche hier als Backenddienste bezeichnet werden. Eine dieser Komponenten dient der Erstellung des Bildmotivs, während die andere Komponente Preview- und Druckdaten erzeugt. Die Druckproduktion 50 kann fester Bestandteil des Versanddienst-Systems oder modular an das System anschließbar sein. Es kann sich dabei beispielsweise um einen oder mehrere Druckdienstleister handeln, welche im Auftrag des Systems Postsendungen drucken. Die Druckproduktion erzeugt mit den erhaltenen Daten eine Postsendung 40, die daraufhin einem Distributionssystem 90 übergeben wird. Das Distributionssystem kann verschiedene Sortier- und Verteilmittel zur Zustellung der Postsendung zu einem Empfänger aufgrund der vom Benutzer angegebenen Zustellinformationen umfassen. In einem besonders bevorzugten Ausführungsbeispiel der Erfindung besteht eine Verbindung zwischen der Druckproduktion 50 und/oder der Beschreibung des Informationsträgers 71 und einer Abrechnungskomponente, so dass eine Meldung über die Speicherung der Informationen in dem Informationsträger 71 und gegebenenfalls über einen durchgeführten Druck und/oder Versand an diese Abrechnungskomponente ergehen kann.

Ein besonders vorteilhafter Bestandteil des erfindungsgemäßen Systems wird durch ein Mobilsystem 11 gebildet. Dabei können ein oder mehrere Mobilsystem/e an das Versanddienst-System 10 angeschlossen sein. Das jeweilige Mobilsystem besteht vorzugsweise aus wenigstens einem mobilen Endgerät 80 zur Generierung von Auftragsdaten, einer Verarbeitungskomponente 92 zur Verarbeitung der Auftragsdaten und Mitteln zur Übermittlung der Auftragsdaten von dem mobilen Endgerät zu dieser Verarbeitungskomponente. Typischerweise umfasst ein Mobilsystem eine Vielzahl von mobilen Endgeräten, welche über Datenübertragungswege wie ein GSM-Netz oder ein UTMS-Netz in Verbindung mit einer oder mehreren Verarbeitungskomponenten stehen.

Bei der Verarbeitungskomponente kann es sich beispielsweise um ein Mobile Switching/Service Center (MSC) handeln, welches typischerweise zusammen mit anderen Komponenten wie Datenbanken die eigentliche Aufgabe der Telefoninfrastruktur übernimmt. Das Erfassen der Rechnungsdaten kann beispielsweise in einer Abrechnungskomponente 93 stattfinden. Eine Verarbeitungskomponente des Mobilsystems kann ferner ein Nachrichtenzentrum (Message Center) aufweisen, über den Short Message Service (SMS)-Nachrichten, Multi Media Message (MMS)-Nachrichten, Sprachnachrichten einer Mailbox, Faxe und E-Mails verarbeitet werden können.

Bei der dargestellten besonders vorteilhaften Ausführungsform des erfindungsgemäßen Verfahrens wird über ein Endgerät 80 ein Auftrag für eine Druckdienstleistung in Verbindung mit einer postalischen Leistung erzeugt. Es handelt sich vorzugsweise um einen Auftrag zum Versenden einer Postkarte. Dazu wählt ein Benutzer ein Motiv zum Druck der Postkarte aus und gibt Zustellinformationen zum Versand der Karte an. Die Auswahl des Motivs kann auf verschiedene Arten erfolgen. Zum einen kann dem Benutzer eine Auswahl an Motiven bereitgestellt werden, zwischen denen er wählen kann. Die Motivauswahl kann dabei beispielsweise auf einem Display des mobilen Gerätes zur Anzeige gebracht werden. Besonders vorteilhaft ist es jedoch, dass der Benutzer ein frei bestimmbares Motiv für eine zu versendende Postsendung wählen kann. Beispielsweise kann er dazu mit dem mobilen Endgerät ein Bild erzeugen und das Gerät dabei als Kamera benutzen. Er kann ferner ein von einem anderen Medium erzeugtes Bild hochladen.

Der Benutzer gibt die für einen Auftrag erforderlichen Zustellinformationen beispielsweise über die Tastatur des mobilen Gerätes ein. Die Zustellinformationen umfassen wenigstens den Namen des Empfängers und dessen Adresse mit Strasse, Postleitzahl und Ort. Zusätzlich kann der Benutzer einen Grußtext eingeben. Die Länge dieses Textes ist begrenzt. Zweckmäßigerweise wird dem Benutzer die maximale Länge des Textes angezeigt.

Die so erzeugten Auftragsdaten werden einer Verarbeitungskomponente 92 des Mobilsystems übermittelt. Die Übermittlung geschieht über ein Mobilfunknetz. Bei dem Format der übermittelten Daten handelt es sich vorzugsweise um das MMS-Format. Innerhalb der Verarbeitungskomponente werden die MMS-Daten auf Rechenmitteln 94 wie Servern bzw. Senderrechnern abgelegt. Bei den Senderrechnern handelt es sich vorzugsweise um Rechner mit festen IP-Adressen. Als IP-Adresse wird eine numerische Adresse eines Netzwerkteilnehmers unter TCP/IP bezeichnet. TCP/IP sind die beiden Protokolle, die den Datenaustausch in Netzwerken, auf dem Internetdienste wie WWW, FTP, E-Mail, News usw. basieren, sicherstellen. TCP ist die Abkürzung für das Transmission Control Protocol. IP ist die Abkürzung für das Internet Protocol.

Die Senderrechner 94 übermitteln die erhaltenen MMS-Daten an die Prüf- und Bearbeitungskomponente 81. Da die Prüf- und Bearbeitungskomponente zu einem Mobilsystem 11, einem Versanddienst-System 10 oder einem eigenen System gehören kann, ist sie in Fig. 2 zwischen den Systemen dargestellt.

Die Prüf- und Bearbeitungskomponente 81 empfängt die MMS-Daten von den Senderrechnern. Die Übertragung erfolgt vorzugsweise über ein abgestimmtes Protokoll wie das smtp-Protokoll. In einem ersten Schritt werden die MMS-Daten ausgefiltert. Beispielsweise werden nur MMS-Daten von Rechnern mit definierten IP-Adressen akzeptiert oder MMS-Daten, die auch Bildinformationen beinhalten. Falls die MMS-Daten keine Bilddaten beinhalten, können sie entweder als fehlerhaft deklariert werden oder das fehlende Motiv wird durch ein Standardmotiv ersetzt. Bei den Filtern kann es sich ferner um Spam-Filter handeln, die ungewünschte und unangeforderte Werbe- und Massenaufträge herausfiltern. Ferner können MMS-Daten ohne Bilder und MMS-Daten, die definierten Größenspezifikationen nicht entsprechen, herausgefiltert werden. Ebenfalls aussortiert werden in einem besonders bevorzugten Ausführungsbeispiel der Erfindung MMS-Texte, in denen definierte Zeichen oder Zeichenfolgen nicht enthalten sind. Beispielsweise können Texte ohne Postleitzahl oder ohne Separator aussortiert werden.

In einem zweiten Schritt werden die Textinformationen der MMS-Daten einer Validierung unterzogen. Die Validierung kann die Überprüfung und Korrektur der Syntax und/oder der Semantik umfassen. Die Syntax kann auf die Benutzereingabe abgestimmt werden und ergibt sich beispielsweise zu: <Name1 >, <Name2>, <Strasse>, <PLZ>, <Ort> und <Text mit maximaler Länge>.

Die Syntax-Validierung kann auch eine automatische Syntaxkorrektur beinhalten, die in definierten Fällen angewendet wird. Beispielsweise wird das Trennzeichen Semikolon in das Trennzeichen Komma umgewandelt, das laut einer Syntaxvorgabe Pflicht sein kann. Außerdem prüft die Syntax-Validierung die Textlänge und kürzt den Text, sofern dieser die zulässige Anzahl an Zeichen überschritten hat. Da Fehleingaben über mobile Endgeräte typisch sind, hat sich bezüglich der Adresse eine weitere Optimierung als sinnvoll erwiesen. Basierend auf einer Logik, die Postleitzahl, Ort und Strasse in der MMS-Nachricht lokalisiert, wird bei syntaktisch oder semantisch inkorrekten MMS-Nachrichten versucht, den Ort beziehungsweise die Postleitzahl und die Strasse zu identifizieren. Diese werden einer automatischen Adresskorrektur auf Basis eines Straßenverzeichnisses unterzogen. Beispielsweise liegt ein Straßenverzeichnis von Deutschland vor, mittels dessen erfasste Zustellinformationen einer MMS-Nachricht im Erfolgsfall automatisch korrigiert werden können.

Syntaktisch korrekte Texte werden in ihre logischen Bestandteile zerlegt und abschließend in einer Datenbank abgelegt. Die Datenbank kann sich ebenfalls innerhalb des Mobilsystems, des Versanddienst-Systems oder in einem anderen Bereich befinden. Syntaktisch fehlerhafte und nicht automatisch korrigierbare MMS-Daten werden als fehlerhaft gekennzeichnet für eine gegebenenfalls stattfindende manuelle Korrektur ebenfalls gespeichert.

In einem weiteren Schritt werden die Bildinformationen der MMS-Daten automatisch aufbereitet. Je nach Eingangsformat werden die Bilder gedreht, skaliert oder die dpi-Zahl erhöht. Außerdem werden sie einer Schärfung unterzogen. Die dafür erforderlichen Graphikroutinen werden beispielsweise über eine Applikation, wie sie von der Firma Adobe angeboten werden, bereitgestellt.

In einem letzten Schritt werden die aufbereiteten Daten der Schnittstelle 30 des Versanddienst-Systems übermittelt. Kommt es bei der Übertragung der Daten zu einem Fehler und/oder wird von der Schnittstelle ein Fehler zurückgemeldet, werden diese Daten ebenfalls als fehlerhaft in der Datenbank vermerkt und, sofern es sich um einen Protokoll- oder Transferfehler handelte, periodisch erneut gesendet.

Fehlerhafte Daten werden durch einen automatischen Prozess in der Datenbank identifiziert, wobei der Sender über eine MSISDN Nummer (Mobile Subscriber ISDN) ermittelt wird. Die MSISDN ist eine Teilnehmernummer, unter der ein Teilnehmer erreichbar ist. Dem Sender wird so eine Nachricht übermittelt, die ihn über den erfolgten Fehler informiert und generelle oder spezifische Handlungsanweisungen für die nächste Einlieferung des Kunden gibt. Diese Benachrichtigung erfolgt beispielsweise in Form einer SMS oder MMS.

Die Schnittstelle 30 übergibt die Auftragsdaten einer Aufbereitungskomponente des Versanddienst-Systems 10, die in einem besonders bevorzugten Ausführungsbeispiel der Erfindung zwei Backenddienste umfasst, welche die für die anschließende Druckproduktion 50 vorzugsweise benötigten PDF-Dateien erzeugen. Ein geeigneter Backenddienst erzeugt Daten über die auf den Informationsträger 71 zu speichernden Wareninformationen und gegebenenfalls zusätzlich weitere Informationen zur Erzeugung von Druckdaten auf Grundlage eines Bildmotivs.

Ein Backenddienst zur Bildmotiv-Erstellung erzeugt Druckdaten für das Motiv. Eine weitere Komponente zur Textvorlagen-Erstellung erzeugt ein Druck-PDF der Textseite. Die Druckdateien werden vorzugsweise als PDF-Dateien in einem speziellen Postkartenformat erzeugt, das beispielsweise Schnittmarken und einen zusätzlichen Rand besitzt und so das Schneiden der Postkarte auf den erzeugten Druckbögen vereinfacht.

Im Folgenden wird beispielhaft die Aufbereitung und Konvertierung von Daten für die Produktion einer Postkarte beschrieben. Es hat sich dabei als zweckmäßig erwiesen, dass der Text für eine zu erzeugende Postkarte in drei Formaten eingeliefert werden kann: Plain-Text (einfacher Text), RTF (Rich Text Format) und XML (Extensible Markup Language).

Das XML-Format entspricht den Druckanweisungen, wie sie auf Seiten der Kartenproduktion vorzugsweise verarbeitet werden. Hiermit können einzeilige Textblöcke, Linien und Bilder millimetergenau positioniert werden. Daher erfolgt vorzugsweise eine Konvertierung in das XML-Format.

Das Format Plain-Text wird daher innerhalb der Aufbereitungskomponente 70 in ein XML-Format konvertiert, so dass ein Vorlagenerstellungs-Kern lediglich das XML-Format verarbeiten können muss. Das Format RTF wird ebenfalls durch ein Modul in XML konvertiert.

Das Plain Text-Format entspricht normalem, unformatiertem Text und wird vom mobilen Endgerät 80 geliefert, wenn der Text vom Benutzer in dieses eingegeben wird. Die Schriftart und -größe des gesamten Textes der Karte kann dabei in der Regel vom Frontend übergeben werden. Bevorzugt ist, dass der eingegebene Text von den Backend-Diensten der Aufbereitungskomponente zeilenweise positioniert wird. Ist eine Textzeile breiter als der Textbereich einer Postkarte, so wird dieser an einem geeigneten Leerzeichen umgebrochen.

Für das Motiv einer Postkarte wird vorzugsweise das Format JPG unterstützt. Enthält das JPG-Bild Angaben über dessen Auflösung (in dpi), ist es vorteilhaft, diese zu verwenden, um die reale Größe des Bildes (in mm) zu bestimmen. Liegen keine Angaben zur Auflösung vor, wird zweckmäßigerweise von einer Standardauflösung ausgegangen. Die Standardauflösung kann beispielsweise 72 dpi betragen.

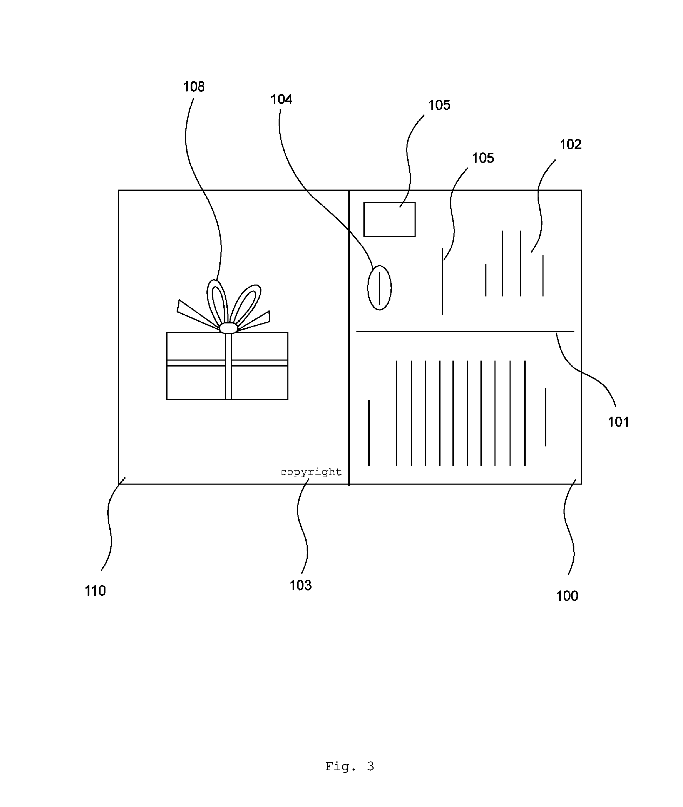

Die zu druckenden Dokumente bestehen aus einer Produktions-Textseite 100 und einer Produktions-Motivseite 110, wie sie in Fig. 3 nebeneinander liegend dargestellt sind. Die Produktions-Textseite 100 kann beispielsweise Elemente wie Kartentext 101, Zustellinformationen (Empfängeradresse) 102, Angaben zu Copyrights 103, ein Firmenlogo 104, einen Freimachungsvermerk 105 oder eine Briefmarke, einen Vorausverfügungsvermerk 106 und/oder ein graphisches Element in Form eines senkrechten Striches 107 zur Aufteilung der Postkarte in zwei Bereiche enthalten.

Es ist besonders zweckmäßig, dass der Freimachungsvermerk 105 verschlüsselte Informationen enthält, wobei die verschlüsselten Informationen in einer besonders bevorzugten Ausführungsform wenigstens teilweise in einem kryptographischen Modul erzeugt und/oder verarbeitet und/oder zwischengespeichert werden.

Eine besonders bevorzugte Ausführungsform sieht vor, dass das gleiche kryptographische Modul, das bei der Erzeugung digitaler Freimachungsvermerke eingesetzt wird, auch bei der Verschlüsselung von Informationen über die Ware eingesetzt wird.

Firmenlogos oder andere kundenindividuelle Graphiken können beispielsweise auch in die Motivseite der Postkarte integriert werden. Das Layout dieser Seite kann fest vorgegeben werden, wobei bestimmte Parameter wie Ränder und Abstände zweckmäßigerweise konfigurierbar sind.

Schriftarten, die nicht Standardschriftarten des PDF-Formates sind und im True-Type-Format vorliegen, werden in die PDF-Datei eingebettet und können damit dem Drucker verfügbar gemacht werden.

Wird vom Benutzer des Systems ein eigenes Bildmotiv heraufgeladen, so wird eine PDF-Datei erzeugt, die das vom Kunden heraufgeladene Bildmotiv enthält, das nach bestimmten Regeln positioniert wird. Wird ein Bild nicht in einem bestimmten Farbraum hochgeladen, kann es in den erforderlichen Farbraum konvertiert werden. Da der CMYK-Farbraum für den Druck von Postkarten bevorzugt wird, wird ein im RGB-Farbraum hochgeladenes Bild für das Produktions-PDF in den CMYK-Farbraum konvertiert. Für ein zu erzeugendes Vorschau-Bild (JPG) kann der RGB-Farbraum beibehalten werden, bzw. das Bild in den RGB-Farbraum konvertiert werden, falls CMYK hochgeladen wurde.

Die Backenddienste analysieren das vom Benutzer hochgeladene Bild und erzeugen daraus eine PDF-Datei für die Produktion. Die Skalierung/Positionierung wird nicht vom Backenddienst durchgeführt, sondern es wird mit entsprechenden Parametern (Breite, Höhe, Position) in die PDF-Datei eingebunden. Somit kann das Bild von einem RIP (Raster Image Processor) optimal berechnet werden. Das Bild für die Produktion wird vor der Platzierung in der PDF-Datei in das CMYK-Farbmodell konvertiert.

Die Aufbereitungskomponente übergibt die durch die Backenddienste erzeugten Druckaufträge einer Druckproduktion 50, welche die Druckaufträge ausführt. Diese Druckproduktionskomponente ist vorzugsweise so ausgestaltet, dass sie unterschiedliche postalische Produkte erzeugen kann. So kann sie beispielsweise Postkarten oder Briefe drucken. Um möglichst flexibel die unterschiedlichsten Postprodukte erzeugen zu können, kann es dabei zweckmäßig sein, verschiedene Druckproduktionskomponenten an das System 10 anzuschließen und/oder in das System zu integrieren. So kann eine Druckproduktion beispielsweise jeweils ein bestimmtes postalisches Produkt erzeugen. Bei den Druckproduktionen kann es sich um systemeigene Komponenten oder um angeschlossene Druckdienstleister handeln, welche Druckaufträge entgegennehmen und diese nach Durchführung einem Distributionssystem 90 übergeben.

Für den Fall, dass der Benutzer ein Motiv für eine Postkarte aus einer vorgegebenen Sammlung ausgewählt hat, liegen diese Motive als vorgerippte PostScript-Dateien mit Schnittmarken auf einem lokalen Speicher der Druckproduktion 50. Die PostScript-Dateien haben beispielsweise das Format: 151,5 x 108 mm. Die Schnittmarken sind so ausgelegt, dass auf das Format 148,5 x 105 mm beschnitten wird. Für die Produktion benötigt die Druckproduktion 50 eine Speicher-Referenz auf die lokale Datei zum Erstellen der Druckanweisung für den Drucker.

Für alle Text-Seiten gibt es vorgerippte PostScript-Dateien auf dem Collator. Diese Dateien beinhalten beispielsweise den Freimachungsvermerk, den senkrechten Strich in der Mitte der Postkarte und den Vorausverfügungsvermerk. Alle weiteren Texte (Copyright, Textfeld, Adressfeld) befinden sich in der PDF-Datei, die von den Backenddiensten erzeugt wurde. Für Reprints wird weiterhin eine eindeutige Kennung der Sendung innerhalb des Druckdatenstromes auf die Sendung gedruckt.

Die Abrechnung der von dem Versanddienst-System 10 durchgeführten Druckleistung und/oder der postalischen Leistung erfolgt über eine Abrechnungskomponente 91 des Versanddienst-Systems. Die Abrechnungskomponente stellt die angefallenen Kosten einer zweiten Abrechnungskomponente 92 in Rechnung, welche zu dem Mobilsystem 11 zugehörig ist. Die zweite Abrechnungskomponente begleicht diese Rechnung und rechnet ihrerseits die Kosten mit dem Benutzer des mobilen Endgerätes ab, welcher den Auftrag erstellt hat. Die Abrechnung erfolgt vorzugsweise über die Handyrechnung des jeweiligen Benutzers. Möglich ist auch eine Abrechnung über die Abbuchung von Beträgen von einer Prepaidkarte.

Die Kosten für eine gedruckte und transportierte Postsendung können auch einem anderen Benutzer in Rechnung gestellt werden, falls beispielsweise ein Zahler in der Form an einem Mobilsystem teilnimmt, das er anderen Benutzern einen teilweise oder vollständig kostenlosen Service zum Versenden von Postsendungen anbietet.

Alternativ ist es möglich, eine Abrechnung erst bei Abholung der Ware an der Ausgabestelle vorzunehmen.

Wie bereits eingangs erwähnt, enthalten die Postsendungen Informationen über die Ausgabestelle beziehungsweise die Ausgabestellen.

Bei einigen Einsatzgebieten der Erfindung ist es zweckmäßig, dass die Informationen über die Ausgabestelle beziehungsweise die Ausgabestellen möglichst eindeutig sind. Dies ist insbesondere dann vorteilhaft, wenn eine schnelle und zuverlässige Aushändigung der Ware an den Empfänger besonders wichtig ist.

Weitere bevorzugte Ausführungsformen der Erfindung ermöglichen es, dem Empfänger der Postsendung Anreize zu geben, mit dem Informationsträger verschiedene Bereiche aufzusuchen.

Ein Anreiz zum Besuchen verschiedener Bereiche ist das Bereitstellen von Belohnungen in einem oder mehreren der ausgewählten Bereiche.

Um auch bei Vorhandensein einer Belohnung oder weniger Belohnungen einen Anreiz zum Aufsuchen mehrerer Bereiche zu geben, ist es vorteilhaft, die Informationen über die Bereiche möglichst allgemein zu halten.

Auch die Information über die Waren kann unterschiedlich konkret sein. Insbesondere für den Fall, dass der Empfänger mit dem Besteller identisch ist, sind Anwendungsfälle zweckmäßig, bei denen er eine möglichst genaue Kenntnis der an ihn zu übermittelnden Ware hat.

Auf diese Weise lässt sich die Erfindung beispielsweise in Online-Bestellsysteme integrieren und diese durch eine besonders einfache und zweckmäßige Zustellung der Waren an den Empfänger verbessern.

Weitere bevorzugte Ausführungsformen der Erfindung beinhalten allgemeinere Angaben über die auszuliefernde Ware beziehungsweise die auszuhändigende Belohnung.

Um den Empfänger der Postsendung zu motivieren, mehrere vorgebbare Orte - gegebenenfalls einschließlich mehrerer Ausgabestellen - aufzusuchen, können außerdem die Informationen über die Ausgabestellen allgemein gehalten sein.

Beispielsweise können die Angaben über die Ausgabestelle beziehungsweise die Ausgabestellen den Empfänger der Postsendung auf einen für ihn bereitliegenden Gewinn in einem der folgenden Geschäfte hinweisen:
Blumenladen B
Juwelier J
Kaufhaus K
Weindepot W

Ferner ist es zweckmäßig, eine Aushändigung des Gewinns in Abhängigkeit von dem Besuch eines oder mehrer Bereiche vorzunehmen.

Neben dem bereits genannten Beispiel der vorgegebenen zu besuchenden Orte ist es alternativ möglich, den Empfänger der Postsendung die Möglichkeit zu geben, auszuwählen, welche der vorgeschlagenen Bereiche er besucht.

Beispielsweise wird der Empfänger aufgefordert, wenigstens einzelne von mehreren Abteilungen eines Kaufhauses zu besuchen (ohne Beschränkung der Allgemeinheit, beispielsweise acht von zwanzig Abteilungen).

Um hierbei eine flexible Zuordnung eines Gewinns zu ermöglichen, ist es zweckmäßig, in den Informationsträger wenigstens eine Zufallszahl zu speichern.

In einer zweckmäßigen Ausführungsform der Erfindung dient die Zufallszahl als Information zu der auszuliefernden Ware im Sinne der Erfindung.

Durch einen Einsatz von Lesegeräten in ausgewählten, zu besuchenden Bereichen ist es möglich, einen Besuch der Bereiche durch den Empfänger des Informationsträgers zu ermitteln und eine Belohnung für den Besuch des Bereichs oder anderer ausgewählter Bereiche zu vergeben.

Hierdurch wird es für den Empfänger der Postsendung attraktiv, wenigstens einzelne Bereiche eines Dienstleistungsunternehmens und/oder eines Handelsunternehmens aufzusuchen.

Hierzu ist es besonders zweckmäßig, Transponder als Informationsträger einzusetzen.

In ausgewählten (an dem erfindungsgemäßen Belohnungssystem teilnehmenden) Dienstleistungs- und/oder Handelsunternehmen sind Geräte angeordnet, welche anhand des Transponders die Anwesenheit des Empfängers der Postsendung ermitteln.

Gegebenenfalls ist eine Identifikation des Empfängers der Postsendung anhand der in dem Transponder gespeicherten Informationsangabe möglich.

Eine derartige Erfassung der Identität ist insbesondere für einen Einsatz der ermittelten Daten in einem Loyalitätsprogramm zweckmäßig.

Alternativ ist es jedoch gleichfalls möglich, in dem Informationsträger keine beziehungsweise keine durch die Leseeinheiten der Bereiche auswertbaren Informationen über den Empfänger zu speichern.

Hierdurch wird der Datenschutz erhöht und dem möglichen Datenschutzinteresse eines Empfängers der Postsendung Rechnung getragen.

Besonders vorteilhafte Ausführungsformen der Erfindung beinhalten eine Wahlmöglichkeit des Empfängers der Postsendung - gegebenenfalls zentral hinterlegbar -, ob er eine Speicherung von ihn identifizierenden Angaben auf dem Informationsträger wünscht.

Eine besonders vorteilhafte Ausführungsform der Erfindung sieht vor, dass der Empfänger der Postsendung auswählen kann, ob Informationen über seine Identität in den Informationsträger eingebracht werden sollen.

Zweckmäßigerweise erfolgt dies durch Hinterlegung einer digitalen Vorausinformation in der Datenbank 31.

Die Speicherung von Informationen über die Datenschutzbedürfnisse der Empfänger in der Datenbank 31 ermöglicht es, die in den Informationsträgern enthaltenen Mikroprozessor-Chips so zu programmieren, dass sie den Datenschutzanforderungen des jeweiligen Empfängers entsprechen.

Beispielsweise ist es möglich, die Mikroprozessor-Chips mit einem logischen Schalter auszustatten, der so beschaffen ist, dass er eine Entscheidung über eine Speicherung oder eine Nichtspeicherung von Bewegungsinformationen ermöglicht.

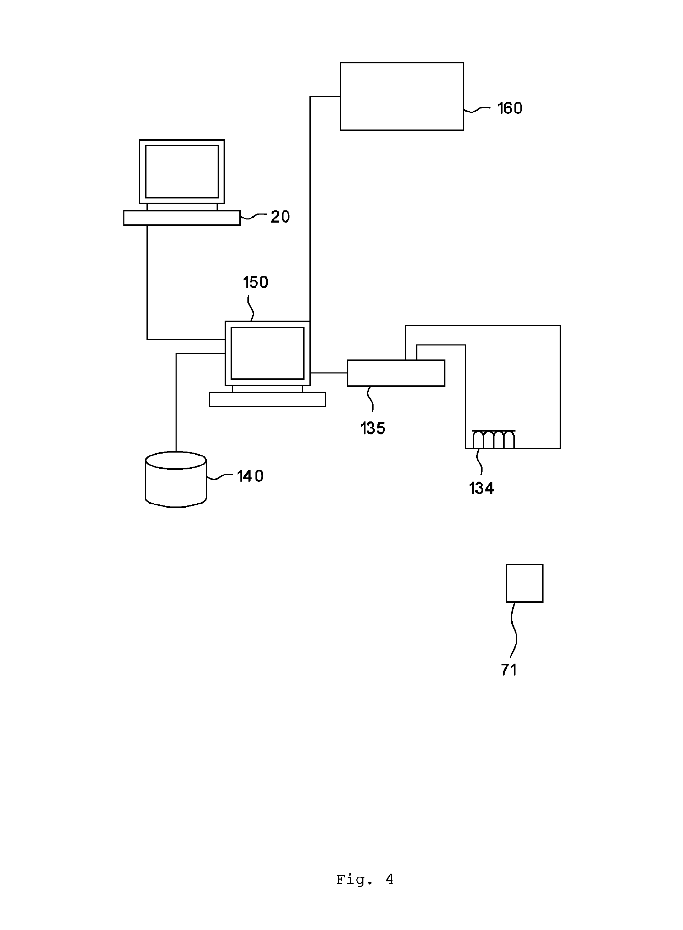

Eine Zuordnung der Belohnungen des Belohnungssystems erfolgt vorteilhafterweise ebenso wie die Ausgabe von Waren in der in Fig. 4 dargestellten Ausgabestelle.

In der Ausgabestelle werden Informationen über die auszuliefernde Ware sowie gegebenenfalls - sofern eine entsprechende Erfassung aktiviert wurde - Bewegungsinformationen des Empfängers berücksichtigt.

Zweckmäßigerweise ist der Signalgeber 160 so ausgestattet, dass er die Zuordnung der auszuliefernden Ware beziehungsweise der auszuliefernden Waren auf Grundlage der in den Informationsträger gespeicherten Informationen vornimmt. Bei den in dem Informationsträger gespeicherten Informationen kann es sich beispielsweise um die eingangs genannten bei der Erstellung der Postsendung eingebrachten Informationen sowie gegebenenfalls zusätzlich um weitere Informationen handeln.

Beispiele für die weiteren Informationen sind Informationen über die besuchten Orte.

Alternativ ist es möglich, Informationen über die besuchten Orte in der Datenbank 140 zu speichern.

Auf Grundlage der gespeicherten Informationen übernimmt der Signalgeber 160 die Zuordnung der auszuliefernden Ware und gegebenenfalls eines zusätzlichen Gewinns als Belohnung für den Besuch ausgewählter Bereiche.

Die Zuordnung der Belohnung in Abhängigkeit des Besuchs der Bereiche kann auf verschiedene Weisen erfolgen. Beispielsweise kann in einer ersten Ausführungsform ausgewertet werden, ob der Empfänger der Postsendung mit dem Informationsträger wenigstens einen ausgewählten Bereich aufgesucht hat.

Hierbei ist es vorteilhaft, die Transponder so auszustatten, dass sie einen ausreichend großen beschreibbaren Speicher für das Speichern der Anwesenheitsinformationen enthalten.

In einer zweckmäßigen Weiterbildung erfolgt eine Erfassung der Aufenthaltsdauer des Empfängers der Postsendung in wenigstens einem der Bereiche.

Hierdurch ist es möglich, die Aushändigung und/oder die Höhe der Belohnung in Abhängigkeit von der Aufenthaltsdauer vorzunehmen.

Obwohl eine Kombination der Aushändigung der Ware mit den Informationen über den Besuch der Bereiche besonders vorteilhaft ist, lässt sich die Erfindung gleichermaßen unabhängig von diesen Informationen durchführen.

Die Unabhängigkeit und die Flexibilität dieser Varianten der Erfindung wird nachfolgend in Fortführung des Beispiels mit den vier verschiedenen Ausgabestellen Blumenladen B, Juwelier J, Kaufhaus K, Weindepot W dargestellt.

Bei einem Besuch der Ausgabestellen werden die in dem Informationsträger enthaltenen Informationen ausgelesen und an den Signalgeber 160 übermittelt.

In einer besonders bevorzugten Ausführungsform ist die Ausgabestelle so ausgestattet, dass sie eine RFID-Antenne 134 und ein RFID-Lesegerät 135 enthält , wobei die RFID-Antenne 134 und das RFID-Lesegerät 135 so ausgestattet sind, dass sie die in dem Informationsträger 71 gespeicherten Informationen lesen und an einen Server 150 übermitteln können.

Der Server 150 ermöglicht eine Verknüpfung von mehreren Komponenten.

Es ist zweckmäßig, dass der Server 150 mit der Auftragskomponente 20 verbunden ist.

Dies ermöglicht beispielsweise eine Übermittlung der Auftragsdaten an den Server. Ferner ist es hierdurch möglich, der Auftragskomponente 20 Informationen über die Abwicklung der Warenaushändigung - insbesondere die Aushändigung der bestellten Ware an den Empfänger - zu übermitteln.

Ferner ist es vorteilhaft, den Server 150 mit einer Datenbank 140 zu verbinden.

In einer besonders bevorzugten Ausführungsform enthält die Datenbank Informationen über vorhandene Waren und/oder ausgelieferte Waren sowie Abholinformationen.

Außerdem ist es zweckmäßig, den Server 150 mit dem Signalgeber 160 zu verbinden.

Beispielsweise wird an einer der Stellen - beispielhaft der Weinabteilung W - festgestellt, ob die Wareninformation und/oder die Zufallszahl einer virtuellen Losnummer für eine Belohnung - beispielsweise eine Flasche Wein - entsprechen.

Die Erfindung beinhaltet auch ein Belohnungssystem, bei dem Bewegungsdaten der Informationsträger für eine Zuordnung von Belohnungen eingesetzt werden.

Eine besonders bevorzugte Ausführungsform des Belohnungssystems und der weiteren Bestandteile der Erfindung sieht vor, hierzu die Informationsträger als RFID-Tags auszubilden.

Ferner ist ein Einsatz von Zufallszahlen zur Zuordnung der Gewinne vorteilhaft.

Eine weitere bevorzugte Ausführungsform der Erfindung sieht vor, die Bewegungsdaten mit den Informationen über die auszuliefernde Ware zu verknüpfen.

Dies ermöglicht es, eine Belohnung - auch in virtueller Form von geldwerten Informationen - in Abhängigkeit von der auszuliefernden Ware und den Bewegungsdaten dem Empfänger zuzuordnen.

Ferner ist es möglich, ein Kaufsverhalten des Kunden auszuwerten und bei der Vergabe der Belohnung zu berücksichtigen.

Die Auswertung des Einkaufsverhaltens des Kunden erfolgt in einer den Datenschutz gewährleistenden Form. Insbesondere ist es zweckmäßig, zu untersuchen, ob gespeicherte Informationen über ein Einverständnis des Kunden mit der Auswertung seines Einkaufsverhaltens vorliegt.

Das Einkaufsverhalten des Kunden kann einen oder mehrere der nachfolgend genannten Aspekte aufweisen: Art und/oder Anzahl der gekauften Artikel, Informationen über das Zahlungsverhalten sowie gegebenenfalls über die Häufigkeit von Einkäufen.

Die Erfindung beinhaltet ferner die Integration von Elementen des Belohnungssystems in andere Bestandteile der Erfindung, insbesondere in das erfindungsgemäße Verfahren zum Versenden von Waren, das erfindungsgemäße Verfahren zum Aushändigen von Waren und die entsprechenden Systeme und Vorrichtungen.

Ferner ist es vorteilhaft, Mittel zur elektronischen Überwachung der Bewegung der Informationsträger in den Bereichen beziehungsweise zwischen den Bereichen vorzusehen.

Ferner ist es zweckmäßig, die Anwesenheit des Informationsträgers in wenigstens einer Ausgabestelle zu erfassen.

Besonders vorteilhaft ist es, aufgrund der festgestellten Anwesenheitsinformationen, welche die Anwesenheit des Informationsträgers in der Ausgabestelle beinhalten, eine Zuordnung einer auszuhändigenden Ware und/oder eine Zuordnung einer Belohnung vorzunehmen.

Hierbei kann auch die Zuordnung der Belohnung als Aushändigung einer Ware erfolgen. Es ist jedoch gleichfalls möglich, virtuelle Belohnungen auszuhändigen - insbesondere in Form von geldwerten Informationen.

Besonders zweckmäßig ist es, in dem Informationsträger gespeicherte Informationen auszuwerten.

Insbesondere erfolgt eine Auswertung der in dem Informationsträger gespeicherten Informationen über die auszuliefernde Ware.

Ferner ist es zweckmäßig, Informationen über die Identität des Informationsträgers zu erfassen und/oder auszuwerten.

Um die Aushändigung der Waren in möglichst einfacher und zuverlässiger Weise durchzuführen, ist es zweckmäßig, dass die Ausgabestelle wie in Fig. 4 dargestellt, ausgebildet ist.

Das in Fig. 4 dargestellte Lesegerät (insbesondere ein RFID-Lesegerät oder ein Lesegerät für Barcodes) übermittelt Informationen über Dateninhalte an den Server 150.

Der Server 150 steuert einen Signalgeber 160.

Der Signalgeber 160 ist so ausgestaltet, dass er eine Zulieferung der auszuliefernden Ware und/oder einer - sonstigen - Belohnung bewirken kann.

Die Zuordnung erfolgt auf Grundlage von in dem Informationsträger 71 gespeicherten Informationen.

Beispiele für die in dem Informationsträger 71 gespeicherten Informationen sind Angaben zu der Identität des Empfängers der Postsendung und/oder zu der auszuliefernden Ware und/oder Bewegungsdaten.

Der Signalgeber ist so ausgestattet, dass er eine Zuordnung der Ware und/oder der - sonstigen - Belohnung unter Einbeziehung dieser Informationen beziehungsweise wenigstens eines Teils dieser Informationen vornehmen kann.

Um eine eindeutige Zuordnung der Ware und/oder der - sonstigen - Belohnung an den Empfänger zu ermöglichen, steuert der Signalgeber 160 eine entsprechende Ausgabeeinrichtung.

In einer ersten einfachen Ausführungsform beinhaltet die von dem Signalgeber gesteuerte Ausgabeeinrichtung eine optische Anzeige.

Die optische Anzeige kann beispielsweise Informationen über die Ware enthalten, so dass beispielsweise eine Bedienperson diese Informationen erhält.

Es ist besonders vorteilhaft, den Signalgeber so auszustatten, dass er eine automatisierte Zuordnung der Ware und/oder der - sonstigen - Belohnung veranlasst.

Dies kann beispielsweise dadurch erfolgen, dass der Signalgeber ein Öffnen eines Faches steuert.

Hierbei kann es sich beispielsweise um ein Fach einer elektronischen Paketfachanlage und/oder eines Warenlagers handeln.

Die Erfindung kann dabei mit unterschiedlichen Ausgabeeinheiten ausgestattet sein.

Ebenso wie die Ausgabeeinheit als eine Schließfachanlage ausgestattet sein kann, sind auch andere Ausführungsformen - beispielsweise Einrichtungen oder Anlagen mit Förderbändern oder nach dem Paternoster-Prinzip - zweckmäßig.

Die dargestellten Komponenten ermöglichen unterschiedliche Realisierungen der Erfindung.

Zunächst erfolgt eine Auswahl eines oder mehrerer geeigneter Empfänger für die Postsendung.

Diese Auswahl des Empfängers kann sowohl nach individuellen Kriterien als auch nach standardisierbaren Kriterien erfolgen.

So ist es beispielsweise ebenso möglich, gezielt einen Empfänger für eine vorgebbare Ware auszuwählen, als auch eine Vielzahl von Empfängern für mehrere - vorzugsweise gleichartige - Waren vorzusehen.

Die Informationen über die Ware sind in einzelnen Ausführungsformen der Erfindung sehr konkret, sodass eine eindeutige Zuordnung einer Ware zu einem Empfänger gewährleistet ist.

Andere, gleichfalls vorteilhafte Ausführungsformen der Erfindung sehen hingegen vor, dass eine Zuordnung der Ware an den Empfänger erst zu einem späteren Zeitpunkt erfolgt.

Hierbei ist es besonders vorteilhaft, die Zuordnung in Abhängigkeit von einer in dem Informationsträger gespeicherten Kennungsinformation vorzunehmen.

Die Kennungsinformation ist vorzugsweise als eine Gattungsinformation ausgebildet, die es ermöglicht, in Abhängigkeit von äußeren Bedingungen (Vorgaben) eine Ware dem Empfänger zuzuordnen.

Beispielsweise kann die Kennungsinformation Angaben darüber enthalten, ob der Empfänger der Postsendung Mitglied einer abgrenzbaren Gruppe, beispielsweise Mitglied eines Vereins oder einer besonders bevorzugten Kundengruppe eines Unternehmens ist.

Hierbei ermöglicht die Kennungsinformation eine Zuordnung in Abhängigkeit von der Gruppenzugehörigkeit und/oder wenigstens eines weiteren Zuordnungsparameters.

Ein besonders bevorzugtes Beispiel eines derartigen Zuordnungsparameters ist die Verfügbarkeit der Ware im Bereich der Ausgabestelle.

Ein weiterer zweckmäßiger Zuordnungsparameter ist ein vorgebbarer Zeitraum.

Es ist vorteilhaft, die Festlegung des Zeitraums in Abhängigkeit von betrieblichen Parametern vorzunehmen.

Ferner ist es vorteilhaft, in unterschiedlichen Zeiträumen unterschiedliche Waren an Empfänger mit gleicher Kennungsinformation auszuhändigen.

Entsprechend der unterschiedlichen Ausgestaltungsmöglichkeiten kann die Erfindung sowohl als eine Verbesserung eines bekannten Warenauslieferungssystems als auch als ein Belohnungssystem ausgestaltet sein.

Die Ausgestaltung als Belohnungssystem erfolgt in einer besonders bevorzugten Ausführungsform unter Einbeziehung ermittelter Verhaltensdaten des Empfängers der Postsendung.

Insbesondere ist es - sofern dies von dem Empfänger gewünscht wurde - zweckmäßig, seine Bewegungsdaten in verschiedenen Bereichen eines Dienstleistungs-ortes (insbesondere eines Kaufhauses) oder an verschiedenen Dienstleistungsorten (beispielsweise verschiedenen Kaufhäusern) zu ermitteln und in Abhängigkeit dieser ermittelten Informationen eine Zuordnung einer Belohnung vorzunehmen.

Die Belohnung kann als Ware und/oder als eine geldwerte Information ausgestaltet sein.

Sowohl bei einer Ausgestaltung der Erfindung als Weiterbildung eines Warenauslieferungssystems als auch bei der hiermit kombinierbaren Ausgestaltung der Erfindung als Belohnungssystem ist es vorteilhaft, den Empfänger der Postsendung sowohl durch die Postsendung selbst als auch durch eine andere geeignete Benachrichtigung über die für ihn bereitgehaltene Ware beziehungsweise die ihm gegebenenfalls als Belohnung ausgehändigte Ware informieren.

Hierdurch wird die Aufmerksamkeit des Empfängers der Postsendung weiter erhöht.

Diese Benachrichtigungen motivieren den Empfänger der Postsendung, wenigstens einen Teil der gewünschten Bereiche aufzusuchen.

Diese Bereiche sind beispielsweise verschiedene mit elektronischen Erfassungsmitteln für den Informationsträger ausgestattete Raumbereiche.

In Abhängigkeit von den jeweils gewünschten Betriebsparametern kann es sich bei den aufzusuchenden Bereichen beispielsweise um ein Kaufhaus, ein Geschäftslokal, eine Abteilung eines Warenhauses oder Geschäftslokals oder auch um einen einzelnen Stand oder ein einzelnes Regal handeln.

Ferner ist es gleichfalls möglich, dass auch die Ausgabestellen jeweils als zur Erfassung der Anwesenheit und/oder der Identität des Informationsträgers ausgebildet sind.

Hierdurch ist es beispielsweise möglich, die Belohnung unmittelbar nach Aufsuchen einer vorgebbaren Anzahl von Bereichen auszuhändigen.

Die Belohnung kann - in Abhängigkeit von vorgebbaren Parametern - sowohl zusätzlich zu einer bereits bestellten Ware als auch als selbstständige Belohnung ausgehändigt werden.

Hierdurch ist es möglich, die Motivation des Empfängers der Postsendung zum Aufsuchen der Bereiche weiter zu erhöhen.

Ferner lassen sich durch die dargestellte besonders bevorzugte Gestaltung der Erfindung weitere Effekte erzielen.

Beispielsweise ist die Aufmerksamkeit des Empfängers der Postsendung durch die vor dem Empfang der Postsendung an ihn gerichtete elektronische Benachrichtigung erhöht.

Ferner vermittelt die vorangegangene Information über die mit einem Informationsträger versehene Postsendung dem Empfänger der Postsendung ein Gefühl über die Werthaltigkeit der speziellen Postsendung und von Postsendungen im Allgemeinen.

Die Information über die Werthaltigkeit von Postsendungen wird bei dem Empfang der Postsendung durch die Informationen über die durch den Informationsträger erzielbare Belohnung weiter erhöht.

Außerdem bemerkt der Empfänger der Postsendung bei einer Abbildung der Ware auf der Postsendung die graphische und haptische Qualität von Postsendungen.

Somit hat die Erfindung den weiteren Effekt, dass Postsendungen mit einem positiven emotionalen Erlebnis verknüpft werden.

Insbesondere durch eine wiederholte Aussendung von mit Belohnungen versehenen Postsendungen ist es möglich, die Identifikation des Empfängers der Postsendungen mit dem Absender der Postsendungen und mit dem die Postsendungen transportierenden Postversandunternehmen zu erhöhen.

Insbesondere ist der Empfänger der Postsendungen hierdurch motiviert, in einer positiven Grundstimmung seinen Briefkasten zu öffnen und ist auch gegenüber den weiteren in seinem Briefkasten befindlichen Postsendungen aufgeschlossen.

Die Erfindung eignet sich somit nicht nur für einen Versand von Waren, sondern auch zu einer positiven Darstellung des Postversandunternehmens.

Außerdem wird dem Empfänger der Postsendung verdeutlicht, dass der Einsatz von Informationsträgern, insbesondere von Transpondern, auch für ihn vorteilhaft ist.

Somit hilft die Erfindung auch, die Akzeptanz von Informationsträgern im Allgemeinen und Transpondern im Besonderen zu erhöhen.

Auch für die Warenhäuser ist es zweckmäßig, die genannten Bereiche und/oder Ausgabestellen einzurichten.

Sie werden hierdurch von dem Empfänger der Postsendung als Orte wahrgenommen, an denen er Waren und/oder Belohnungen empfängt.

Dies hat für die Betreiber der jeweiligen Verkaufsstätte sowohl einen positiven Werbeeffekt als auch den unmittelbaren Effekt, dass der Empfänger der Postsendung veranlasst wird, die jeweilige Verkaufsstätte aufzusuchen.

Die dargestellten Ausführungsformen der Erfindung sind somit für folgende Anwender gleichermaßen vorteilhaft: Auftraggeber der Postsendungen, Postversandunternehmen, Empfänger der Postsendung, Hersteller von Informationsträgern (insbesondere von Transpondern) und Verkaufsunternehmen.

### Bezugszeichenliste:

- 10: Versanddienst-System
- 11: Mobilsystem
- 20: Auftragskomponente
- 30: Schnittstelle Versanddienst-System
- 31: Datenbank Versanddienst-System
- 40: Postsendung
- 50: Druckproduktion
- 70: Aufbereitungskomponente, Backenddienste
- 71: Informationsträger*
- 72: Adressangaben
- 80: Endgerät
- 81: Prüf- und Bearbeitungskomponente
- 90: Distributionssystem
- 91: Verknüpfungselement
- 92: Verarbeitungskomponente Mobilsystem / zweite Abrechnungskomponente
- 93: Abrechnungskomponente Mobilsystem
- 94: Rechenmittel Mobilsystem, Senderrechner, Server
- 95: Datenbank Mobilsystem
- 100: Textseite
- 101: Kartentext
- 102: Zustellinformationen
- 103: Angaben zu Copyrights
- 104: Firmenlogo
- 105: Freimachungsvermerk, Briefmarke
- 106: Vorausverfügungsvermerk
- 107: Graphische Elemente zur Postkartenaufteilung
- 108: Postkartenmotiv
- 110: Motivseite
- 120: RFID-Steuereinheit
- 125: Schreibkomponente (RFID-Antenne)
- 130: Druckkomponente
- 134: RFID-Antenne
- 135: RFID-Lesegerät 135
- 140: Datenbank
- 150: Server
- 160: Signalgeber

## Patentansprüche

1. Warenauslieferungssystem mit einer oder mehreren Ausgabestellen zur Auslieferung von Waren an einen vorgesehenen Empfänger,
wobei ein Informationsträger (71), der eine Warenaushändigung veranlasst, zur Versendung an eine postalische Adresse des vorgesehenen Empfängers der Ware vorgesehen ist und die Ware an einer von der postalischen Adresse des Empfängers verschiedenen Ausgabestelle zur Abholung bereitgestellt wird,
wobei der Informationsträger (71) in eine Postsendung (40) integriert oder mit der Postsendung (40) verbindbar ist und Informationen zu der zu liefernden Ware in maschinenlesbarer Form umfasst,
wobei die Ausgabestellen so ausgestaltet sind, dass sie jeweils wenigstens einen Signalgeber (160) enthalten, der mit einer Leseeinheit zum Lesen der Information in dem Informationsträger (71) verbunden ist und an den die ausgelesenen Informationen übermittelt werden,
wobei das Warenauslieferungssystem eine Abrechnungskomponente umfasst, die zur Abrechnungen von erbrachten Leistungen umfassend das Beschreiben des Informationsträgers (71), den Transport des Informationsträgers (71) zum Empfänger, die Übermittlung der Ware an die Ausgabestellen und die Auslieferung der Waren an den Ausgabestellen nach Aushändigung der Ware an den Empfänger dient, wobei die Abrechnungskomponente zur Verarbeitung von geldwerter Information geeignet ist, und
wobei der Informationsträger (71) einen Teil der geldwerten Information zur Bezahlung dieser Leistungen umfasst, wodurch sichergestellt wird, dass eine Abrechnung erst dann erfolgt, wenn der Empfänger die Ware an der Ausgabestelle erhält.

2. Das Warenauslieferungssystem nach Anspruch 1,
**dadurch gekennzeichnet,**
**dass** der Informationsträger ein RFID-Tag ist

3. Das Warenauslieferungssystem nach einem der Ansprüche 1 oder 2,
**dadurch gekennzeichnet,**
**dass** das Warenauslieferungssystem des Weiteren eine Datenbank (31) umfasst, in der die Informationen zu der auszuliefernden Ware und wenigstens eine für die Warenauslieferung vorgesehene Ausgabestelle enthalten sind und die mit den verschiedenen Komponenten des Warenauslieferungssystem in Verbindung steht.

4. Das Warenauslieferungssystem nach Anspruch 3,
**dadurch gekennzeichnet,**
**dass** der Informationsträger ein Transponder mit einem Mikroprozessorchip ist und die Datenbank des Weiteren eine digitale Vorausinformation umfasst, ob der Empfänger wünscht, dass Informationen über seine Identität oder über seine Bewegungen in den Mikroprozessorchip eingebracht werden sollen.

5. Das Warenauslieferungssystem nach Anspruch 4,
**dadurch gekennzeichnet,**
**dass** der Mikroprozessorchip mit einem logischen Schalter ausgestattet ist, der eine Entscheidung über eine Speichrung oder eine Nichtspeicherung von Bewegungsinformationen ermöglicht.

6. Das Warenauslieferungssystem nach Anspruch 4 oder 5,
**dadurch gekennzeichnet,**
**dass** das Warenauslieferungssystem des Weiteren Lesegeräte umfasst, die dazu vorgesehen sind, anhand des Informationsträgers den Besuch eines ausgewählten Bereichs durch den Empfänger zu ermitteln, wobei die Bewegungsdaten in dem Informationsträger gespeichert werden und/oder die in dem Informationsträger gespeicherte Information der Identität des Empfänger der Postsendung erfasst.

7. Das Warenauslieferungssystem nach einem der vorangegangenen Ansprüche,
**dadurch gekennzeichnet,**
**dass** die Leseeinheit der Ausgabestelle zum Lesen der Information in dem Informationsträger (71) eine RFID-Antenne (134) und ein RFID-Lesegerät (135) umfasst, die so ausgestattet sind, dass sie die gelesene Information an einen Server (150) übermitteln, der mit dem Signalgeber (160) verbunden ist.

8. Das Warenauslieferungssystem nach einem der vorangegangenen Ansprüche,
**dadurch gekennzeichnet,**
**dass** der Signalgeber (160) so ausgestaltet ist, dass er eine Zuordnung der auszuliefernden Ware auf Grundlage der in den Informationsträger (71) gespeicherten Informationen vornimmt, vorzugsweise umfasst die Information weitere Informationen über die von dem Empfänger besuchten Bereiche.

9. Das Warenauslieferungssystem nach einen der voranstehenden Ansprüche,
**dadurch gekennzeichnet,**
**dass** die Information verschlüsselt ist.

10. Das Warenauslieferungssystem nach einem der vorangegangenen Ansprüche,
**dadurch gekennzeichnet,**
**dass** die Abrechnungskomponente mit einer zweiten Abrechnungskomponente zugehörig zu einem Mobilsystem und/oder eCommerce-System zur Inrechnungstellung der für die jeweilige Leistungen anfallenden Kosten verbunden ist, vorzugsweise erfolgt die Abrechnung über eine Handyrechnung, eine Abbuchung von einer Prepaidkarte oder einer sonstigen Übermittlung geldwerter Informationen insbesondere unter Einsatz eines eCommerce-Centers oder von PayMarks.

11. Das Warenauslieferungssystem nach einen der vorangegangenen Ansprüche,
**dadurch gekennzeichnet,**
**dass** das Warenauslieferungssystem eine Schreibkomponente (125) zum Schreiben der Information auf den Informationsträger umfasst, die so ausgestaltet ist, dass sie einen zwei- oder dreidimensionalen Code als maschinenlesbare Information drucken kann und dass ein bedrucktes Objekt graphisch erkennbare Angaben zu der auszuliefernden Ware enthält, oder dass die Schreibkomponente (125) einen Sender für elektromagnetische Strahlung enthält und dass ein mit der Postsendung verbundener oder verbindbarer Transponder der Informationsträger für die Informationen zu der auszuliefernden Ware ist.

12. Verfahren zum Betreiben eines Warenauslieferungssystems mit einer oder mehrerern Ausgabestellen zur Auslieferung von Waren an einen vorgesehenen Empfänger nach Anspruch 1, umfassend die Schritte:
- Bereitstellen der Ware zur Abholung an einer von der postalischen Adresse des Empfängers verschiedenen Ausgabestelle,
- Integrieren eines Informationsträger (71) in eine Postsendung (40) oder Verbinden des Informationsträgers (71) mit der Postsendung (40), wobei der Informationsträger Informationen zu der zu liefernden Ware in maschinenlesbarer Form umfasst,
- Versenden des Informationsträgers (71) zur Veranslassung der Warenaushändigung an eine postalische Adresse des vorgesehenen Empfängers der Ware,
- Lesen der Information in dem Informationsträger (71) mit einer Leseeinheit der Ausgabestelle und Übermitteln der ausgelesenen Informationen an wenigstens einen Signalgeber (160), der mit der Leseeinheit verbunden ist,
- Abrechnen von erbrachten Leistungen umfassend das Beschreiben des Informationsträgers (71), den Transport des Informationsträgers (71) zum Empfänger, die Übermittlung der Ware an die Ausgabestellen und die Auslieferung der Waren an den Ausgabestellen nach Aushändigung der Ware an den Empfänger durch eine Abrechnungskomponente des Warenauslieferungssystem, wobei die Abrechnungskomponente zur Verarbeitung von geldwerter Information geeignet ist,
- Sicherstellen, dass die Abrechnung erst dann erfolgt, wenn der Empfänger die Ware an der Ausgabestelle erhält, indem der Informationsträger (71) einen Teil der geldwerten Information zur Bezahlung dieser Leistungen umfasst.

13. Das Verfahren nach Anspruch 12,
**dadurch gekennzeichnet,**
**dass** das Verfahren des Weiteren ein Ermitteln eines Besuchs eines ausgewählten Bereichs durch den Empfänger anhand des Informationsträgers mittels weiterer Lesegeräte im Warenauslieferungssystem umfasst, wobei die Bewegungsdaten in dem Informationsträger gespeichert werden.

14. Das Verfahren nach Anspruch 13,
**dadurch gekennzeichnet,**
**dass** das Verfahren des Weiteren ein Erfassen der Identität des Empfängers der Postsendung mit den Lesegeräten anhand der in dem Informationsträger gespeicherten Informationen umfasst.

15. Das Verfahren nach einem der Ansprüche 14,
**dadurch gekennzeichnet,**
**dass** das Verfahren den Schritt des Entscheidens über eine Speichrung oder eine Nichtspeicherung der Bewegungsinformationen durch den Empfänger umfasst, wobei der Informationsträger ein Transponder mit einem Mikroprozessorchip ist, der dazu mit einem logischen Schalter ausgestattet ist.
